# EUROPEAN PATENT SPECIFICATION

(11) **EP 1 737 206 B1**
(45) Date of publication and mention of the grant of the patent: **16.04.2014**
(21) Application number: 06253268.4
(22) Date of filing: 23.06.2006
(51) Int. Cl.: H04N 1/00

(54) **Image output apparatus, image output system, and program**
Bildausgabeapparat, Bildausgabesystem und Programm
Appareil et procédé de traitement d'images et programme

(30) Priority: 24.06.2005 JP 2005185365
(43) Date of publication of application: 27.12.2006
(73) Proprietor: Brother Kogyo Kabushiki Kaisha, Nagoya-shi, Aichi-ken 467-8561 (JP)
(72) Inventor: Aoki, Kazuma, Nagoya-shi Aichi-ken 467-8562 (JP); Ohara, Kiyotaka, Nagoya-shi Aichi-ken 467-8562 (JP); Matsuda, Makoto, Nagoya-shi Aichi-ken 467-8562 (JP)
(74) Representative: Smith, Samuel Leonard

(56) References cited:
- WO-A-2004/046982
- WO-A-2005/057907
- US-B1- 6 332 146

## Description

### Cross Reference to Related Application

This application claims priority from Japanese Patent Application No. 2005-185365, filed on June 24, 2005, the entire subject matter of the application is incorporated herein by reference.

### Background

### Technical Field

Aspects of the invention relate to an image output apparatus, an image output system, and a program product containing instructions to operate the apparatus and the system.

### Related Art

Conventionally, an image output apparatus configured to obtain image data from an external device (for example, a server) via a telephone network or a computer network for printing an image based on the obtained image data is known. This type of image output apparatus may be equipped with a plurality of image output units, each of which has a different manner to output an image, such as an LCD (liquid crystal display) and a printing unit.

An example of such an image output apparatus having an LCD and a printing unit is disclosed in Japanese Patent Provisional Publication No. 2001-22539. The image output apparatus in the above-referenced publication is capable of processing image data obtained from an internet site and displaying an image represented by the data on the LCD, and printing the image when printing is required by a user.

In such a conventional image output apparatus, an image indicating the contents of the received data is displayed on the LCD, so that a part of the image data required and specified by the user is selectively printed. When the image data is received and the image to be printed is displayed on the LCD, the image (i.e., a so-called "print preview screen") may be in many cases too rough and too difficult for the user to recognize the contents of the image to be printed, due to a size and a screen resolution of the LCD.

The LCD on the conventional image output apparatus is configured to be considerably small and the resolution thereof is lower compared to a normal LCD used with a personal computer and the like. More specifically, the resolution of the LCD of the conventional image output apparatus is significantly lower than a resolution of the printing unit. Therefore, when the image data is processed, merely a small part of the image can be shown, and the user may not find the function of the print preview screen beneficial.

The pre-characterizing section of claim 1 is based upon US-B1-6,332,146. This document discloses a system including a storage device for storing digital data, a job order developer responsive to inputs received from the first user and a router for electronically routing a job order to a second user specified by the first user.

### Summary

Aspects of the present invention are advantageous in that an image output apparatus capable of outputting an image based on data obtained from an external device by using a preferable output unit among a plurality of output units with different functions equipped to the apparatus is provided. Another aspects of the present invention are advantageous in that an image output apparatus capable of outputting an image based on image data obtained from an external device by selectively using an image output unit that requires lower running cost among other image output units that require higher running cost is provided so that outputting the image can be performed cost-effectively.

The following describes general aspects of the invention that may or may not be included in various embodiments and modifications. It should be noted that various connections are set forth between elements in the following description. It should be noted that these connections in general and, unless specified otherwise, may be direct or indirect and that this specification is not intended to be limiting in this respect.

According to the invention, there is provided an image output apparatus according to claim 1.

According to the above configuration, the image output apparatus can control data that is more preferable to one of a plurality of image output devices with different capabilities to be output from the more preferable device. Therefore, when a provider of the data generates data for the more preferable image output device according to the capability of the device, the image output appratus can control the plurality of image output devices to have the data output from the more preferable image output device.

When the provider of the data generates data as the first data that contains information to indicate a content of the second data, the image output apparatus can output an image as the first image that represents the content of the second data from the first image output device so that the user can view the representation of the second data. Further, with the output first image, the user can easily judge whether the second image based on the second data should be output from the second image output device.

In the conventional image output apparatus, as described above, the print preview screen with too large quantity of information therein is shown on the LCD with a lower resolution. Therefore, depending on a size and the resolution of the LCD, the user may have difficulties to recognize the content of the printed output before a printing operation is performed. In some cases, the user may even find viewing the preview screen troublesome, and may start the printing operation without confirming the content shown in the preview screen.

It should be noted the image output device of the present invention, on the other hand, the user can easily judge whether the second image should be output from the second image output device by viewing the first image output from the first image output device.

Therefore, the user can avoid an unnecessary output of the second image from the second image output device.

When, for example, the image output appratus of the present invention is configured to have an LCD as the first image output device and a printing device as the second image output device, the first image based on the first data can be shown on the LCD instead of the conventional print preview screen, so that the user can easily recognize the content of the second image before printing. Therefore, an unnecessary printing operation can be prevented and cost for otherwise wasted printing can be reduced.

It should be noted that the image output apparatus in the present invention is adapted to obtain the second data when the second data is required. In other words, the second data is not obtained when it is not required, therefore, a process load to the image output apparatus in an obtaining operation can be reduced.

It should be noted that the image output apparatus in the present invention may be provided with an instruction input system, which issues the output instruction when the user does not gives an prohibition instruction via the input device. With this configuration, when the user does not gives the prohibition instruction, the second obtaining system and the second controlling system may be configured to be activated based on the output instruction issued from the instruction input system. However, when the image output apparatus is configured as above, an unnecessary image output may be performed regardless of the user's intention, even when the user intends to prevent the second data from being output.

The image output apparatus may include an input device that is adapted to be operated by the user for an inputting operation. The second obtaining system may be adapted to obtain the second data associated with the first data in response to the output instruction from the user to the second image output device is inputted to the input device.

According to the above configuration, the user can view the first image as an output result of the first data output from the first image output device before inputting the output instruction. Therefore; merely the required second data can be selectively obtained by the second obtaining system and output as the second image from the second image output device in the cost-effective manner.

When a volume of the data to be output is small enough to be output from the first image output device with the lower resolution as the first image, the second data may not be provided. In such a case, if the user is not notified of existence or absence of the second data, the user may be confused in determining whether the user desires the second image.

The first controlling system may be adapted to output the first image indicating absence of the locator information from the first image output device when the first obtaining system obtains the first data but lacks the locator information associated with the first data.

According to the above configuration, the user can be notified of the existence and the absence of the second data when the first data is output from the first image output device. Therefore, the user can be prevented from misunderstanding that the image output apparatus is malfunctioning.

Optionally, the first image output device may be a display device that optically outputs an image, and the second image output device may be a printing device that prints an image on a recording medium.

According to the above configuration, cost for outputting the first image from the first image output device can be considerably low and substantially ignorable compared to cost for outputting the second image from the second image output device. Therefore, outputting the second image from the second image output device can be performed in the cost-effective manner.

With the above configuration, when information that is updated constantly, for example information provided from an internet site, is output by using the image output apparatus in the present invention, the first data as a summarized content that can be output at lower cost can be output from the first image output device, and the second data as detailed information that can be output at higher cost can be output from the second image output device according to a request from the user.

According to furthermore aspects of the invention, there is provided an image output system, having an image output apparatus according to the first aspect of the invention, a server having a storing unit to store therein the first data and the locator information that are in association with each other and delivered to the image output apparatus to be output from the first image output device, and the second data that is in association with the first data and delivered to the image output apparatus to be output from the second image output device in response to the output instruction from the user, wherein the delivery of the first data, the locator information, and the second data is administrated by an administration system.

According to furthermore aspects of the invention, there is provided an image output system, having an image output apparatus according to the first aspect of the invention an authentication system, which is adapted to execute an authentication process to judge whether the user is an authorized user based on identification information of the user inputted via the input device; and an output controlling system, which is adapted to control outputting the second image based on the second data that has been attempted to be obtained in response to the output instruction from being output from the second image output device when the authentication system judges whether the user is an authorized user.

Optionally, the output controlling system includes an output preventing system, which is adapted to prevent the second image based on the second data that has been attempted to be obtained in response to the output instruction from being output from the second image output device when the authentication system determines that the user is an unauthorized user.

Optionally, the output controlling system includes an output allowing system, which is adapted to allow the second image based on the second data that has been attempted to be obtained in response to the output instruction to be output from the second image output device when the authentication system determines that the user is an authorized user.

Optionally, the image output system may have a judging system, which is adapted to judge whether the second data requires an authentication process before the second obtaining system attempts to obtain the second data. The authentication system may execute the authentication process when the judging system determines that the authentication process is required.

As an image output apparatus such as an MFP is often shared by a plurality of users, the data output from the shared image output apparatus is in many cases required security for confidentiality. Therefore, in the image output system of the present invention, the first data may be adapted to include a content with lower confidentiality, while the second data may be adapted to include a content with higher confidentiality With this configuration, a user authenticated through the authentication process by the authentication system can give the output instruction to the second image output device and obtain the second image, while the output instruction from an unauthorized user is invalidated, and thus the confidentiality of the data output from the shared image output apparatus can be secured.

According to the invention, there is provided a method according to claim 10.

Optionally, there may be provided a computer program product including computer readable instructions, which are adapted to cause a computer to output a first image output device and a second image output device in the method described above.

It should be noted that the program product includes a row of computer readable instructions arranged in a predetermined order. Such instructions may be distributed to computer systems or users of computer systems via a recording medium such as a flexible disk, CD (compact disc), CD-ROM, memory card and the like. Alternatively or optionally, the computer readable instructions may be distributed via a communication network such as the Internet. The computer readable instructions may be provided to users in the form of programs pre-installed on a hard disk or memory of the computer system.

### Brief Description of the Accompanying Drawings

Fig. 1 shows a block diagram to illustrate a configuration of a delivery system 1 according to an embodiment of the invention.

Figs. 2A-2B show illustrative screen views of images shown on a screen of a display unit 21 according to the embodiment of the invention.

Fig. 3 shows an illustrative view of an printed output of delivery data for printing according to the embodiment of the invention.

Fig. 4 shows a diagram to illustrate an operation of a delivery data generating task according to the embodiment of the invention.

Fig. 5 shows a diagram to illustrate a configuration of the delivery data for displaying according to the embodiment of the invention.

Fig. 6 shows a flowchart and a diagram to illustrate a delivery job registration requiring task executed by a control unit 31 of a delivery server 30 according to the embodiment of the invention.

Fig. 7 shows a flowchart to illustrate a delivery server responding process executed by the delivery server 30 according to the embodiment of the invention.

Figs. 8A-8C show diagrams to illustrate configurations of data to be stored in an administration server 50 according to the embodiment of the invention.

Fig. 9 shows a flowchart to illustrate an administration server reception process executed by a control unit 51 of the administration server 50 according to the embodiment of the invention.

Fig. 10 shows a flowchart to illustrate a job registering process executed by the control unit 51 of the administration server 50 according to the embodiment of the invention.

Fig. 11 shows diagrams to illustrate a configuration of data to be stored in a memory unit 23 of an MFP (multi-function peripheral) 10 according to the embodiment of the invention.

Fig. 12 shows a flowchart to illustrate a main process executed by a control unit 11 of the MFP 10 according to the embodiment of the invention.

Fig. 13 shows a flowchart to illustrate a delivery information displaying process executed by the control unit 11 of the MFP 10 according to the embodiment of the invention.

Fig. 14 shows a flowchart to illustrate a display target registering process executed by the control unit 11 of the MFP 10 according to the embodiment of the invention.

Fig. 15 shows a flowchart to illustrate a display target deleting process executed by the control unit 11 of the MFP 10 according to the embodiment of the invention.

Fig. 16 shows a flowchart to illustrate a display target updating process executed by the control unit 11 of the MFP 10 according to the embodiment of the invention.

Fig. 17 shows a flowchart to illustrate a print control process executed by the control unit 11 of the MFP 10 according to the embodiment of the invention.

Figs. 18A-18C show illustrative views of screens and a printed output when delivery data for printing is obtained according to the embodiment of the invention.

### Detailed Description

Hereinafter, referring to the accompanying drawings, a delivery system according to an embodiment of the invention will be described.

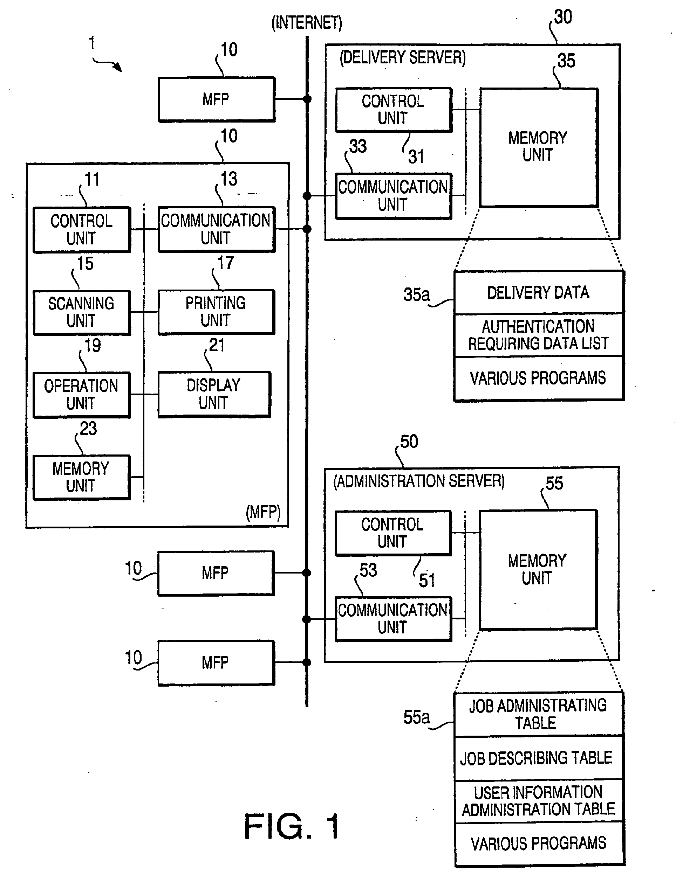

Fig. 1 shows a block diagram to illustrate a configuration of a delivery system 1 according to an embodiment of the invention. As shown in Fig. 1, the delivery system 1 includes a plurality of digital MFPs 10, a delivery server 30, and an administration server 50, which are respectively connected to a computer network such as the Internet.

Each of the MFPs 10 includes a control unit 11, a communication unit 13, a scanning unit 15, a printing unit 17, an operation unit 19, a display unit 21, and a memory unit 23. The control unit is configured to control internal operations of the MFP 10. The communication unit 13 is adapted to connect the MFP 10 to the computer network, and is capable of bi-directionally communicating with the other devices in the computer network. The scanning unit 15 is adapted to optically scan an original image provided on a surface of an exemplar material, which is laid on a platen glass of the scanning unit 51, and to generate image data based on the scanned image. The printing unit 17 is adapted to print various images based on the data provided by the scanning unit 15 and by other sources on a recording medium such as a sheet of paper. The operation unit 19 is provided with a various keys to be operated by a user for manipulating the MFP 10. The display unit 21 includes an LCD that is capable of displaying (optically outputting) various information for the user to view. The memory unit 23 includes a non-volatile memory and a hard disk drive to store various data therein.

The MFP 10 is assigned a unique identification (an MFP ID) that can be recorded physically or electrically. As can be seen in known MFPs, a maximum allowable printing resolution for the printing unit 17 is configured to be higher than a maximum allowable displaying resolution of the display unit 21.

The control unit 11 of the MFP 10 includes a CPU (central processing unit, not shown), a ROM (read-only memory, not shown), a RAM (random access memory, not shown). With this configuration, the MFP 10 is enabled to execute various programs stored in the memory unit 23 and the ROM so that various functions equipped to the MFP 10 can be achieved. The control unit 11, for example, is configured to execute a program to control internal operation of the MFP 10 so that a network printing function, a scanning function, and a copying function can be achieved.

Further, the control unit 11 of the present embodiment is configured to obtain various delivery data from the delivery server 30 via the communication unit 13 by executing a program. When the obtained delivery data is delivery data to be displayed (hereinafter referred to as display delivery data), the data is processed so that an image according to the data is displayed on the display unit 21. When the obtained delivery data is delivery data to be printed (hereinafter referred to as print delivery data), the data is processed so that an image according to the data is printed by the printing unit 17.

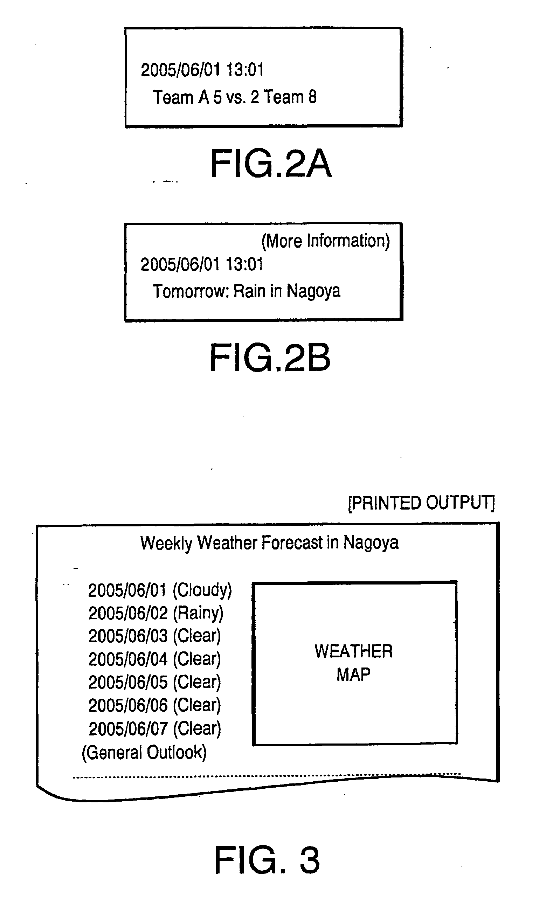

Figs. 2A and 2B show illustrative screen views of images shown on a screen of the display unit 21 according to the embodiment of the invention. The display delivery data stored in the delivery server 30 includes various information to be delivered, for example weather forecast or outcomes of sport games, which is recorded in a document format. When the control unit 11 of the MFP 10 receives the display delivery data from the delivery server 30, the control unit 11 processes the same so that information corresponding to the received display delivery data is displayed as weather forecast or outcomes of sport games on the display unit 21 in a text-image format.

The display delivery data including a brief summary of the content of the information to be delivered may further include a URL (uniform resource locator) of print delivery data. The print delivery data includes detailed information of the information to be delivered, and the URL of the print delivery data indicates a location of a resource from which the print delivery data is obtained. When the URL of the print delivery data is included in the display delivery data, the control unit 11 processes the display delivery data to display the text and image information according to the display delivery data along with character strings (for example "more information" as shown in Fig. 2B) on a predetermined position, for example upper right, of the display unit 21 to notify the user of presence of the print delivery data. When the URL of the print delivery data is not included in the display delivery data, the control unit 11 of the MFP 10 processes the display delivery data to display only the text and image information according to the display delivery data, without the character strings ("more information"), on the display unit 21 as shown in Fig. 2A. Thus, the user is notified of absence of the print delivery data.

When the image according to the display delivery data with the URL of the print delivery data is displayed on the display unit 21, as shown in Fig. 2B, and a print instruction is inputted by the user via the operation unit 19, the control unit 11 obtains the print delivery data from a resource location in the delivery server 30 indicated by the URL included in the display delivery data via the communication unit 13, and controls the printing unit 17 to print the image as a printed output according to the print delivery data.

Fig. 3 shows an illustrative view of the printed output of the print delivery data, which is obtained through the above-described process.

It should be noted that, in the present embodiment, the printing unit 17 of the MFP 10 is capable of outputting images in a higher resolution than the screen resolution of the display unit 21. Based on the resolution difference, in the delivery server 30, delivery data including a brief summary of the information to be delivered is administrated as the display delivery data, while delivery data including detailed information that is in too large volume to be displayed in one screen of the display unit 21 of the MFP 10 is administrated as the print delivery data. Therefore, when an image with text indicating information on for example weather forecast is displayed and a print instruction is inputted by the user, more detailed information on the weather (one-week forecast in the example shown in Fig. 3) is obtained and printed to be viewed by the user. The process of the MFP 10 to obtain and print the detailed information will be described hereinbelow in detail.

Next, a configuration and operations of the delivery server 30 will be described. As shown in Fig. 1, the delivery server 30 includes a control unit 31, a communication unit 33, and a memory unit 35 having a hard disk drive. The control unit 31 is equipped with a CPU (not shown), a ROM (not shown), a RAM (not shown), and the like. The communication unit 33 is adapted to connect the delivery server 30 to the computer network, and is capable of bi-directionally communicate with the other devices (i.e., the MFPs 10 and the administration server 50) in the computer network. The memory unit 35 stores therein various data, such as various programs, and includes a delivery data storage 35a, wherein the display delivery data and the print delivery data are stored, and an authentication requiring data list, which indicates data that requires an authentication upon delivery.

The delivery server 30 is provided with a function to serve as a mail server and a function to generate delivery data. With these functions, the delivery server 30 is enabled to execute a plurality of delivery data generating tasks, each of which generate a different kind of delivery data. The generated delivery data is thereafter stored in the delivery data storage 35a.

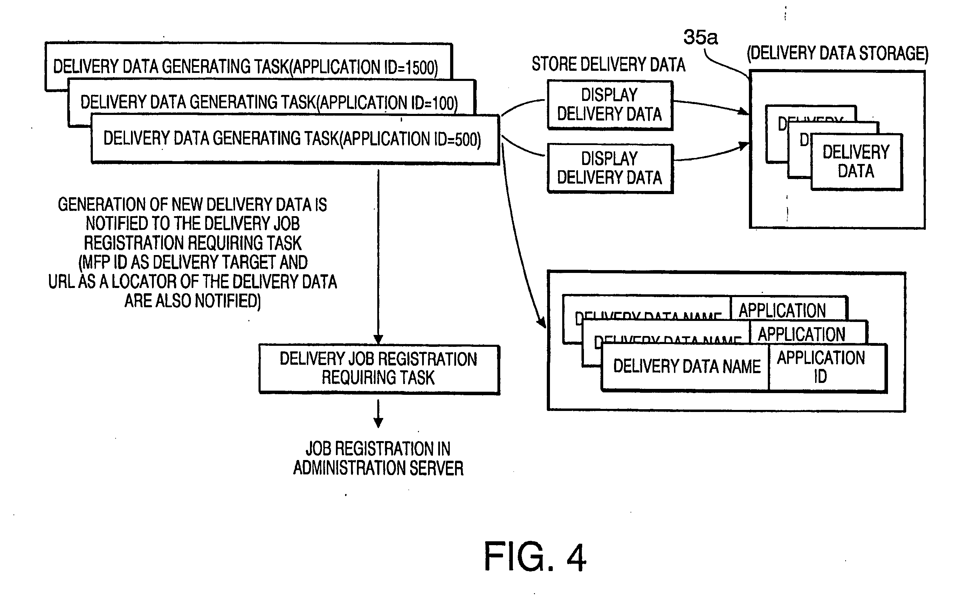

Fig. 4 shows a diagram to illustrate an operation of the delivery data generating task according to the embodiment of the invention. In this example, when a first delivery data generating task is executed, display delivery data regarding sport game outcomes indicating outcomes of sport games is generated and stored in the delivery data storage 35a. Then, in a second delivery data generating task, display delivery data that indicates a brief summary of weather forecast and print delivery data that indicates detailed forecast (i.e., one-week forecast) as a delivery data pair regarding weather forecast are generated and stored in the delivery data storage 35a.

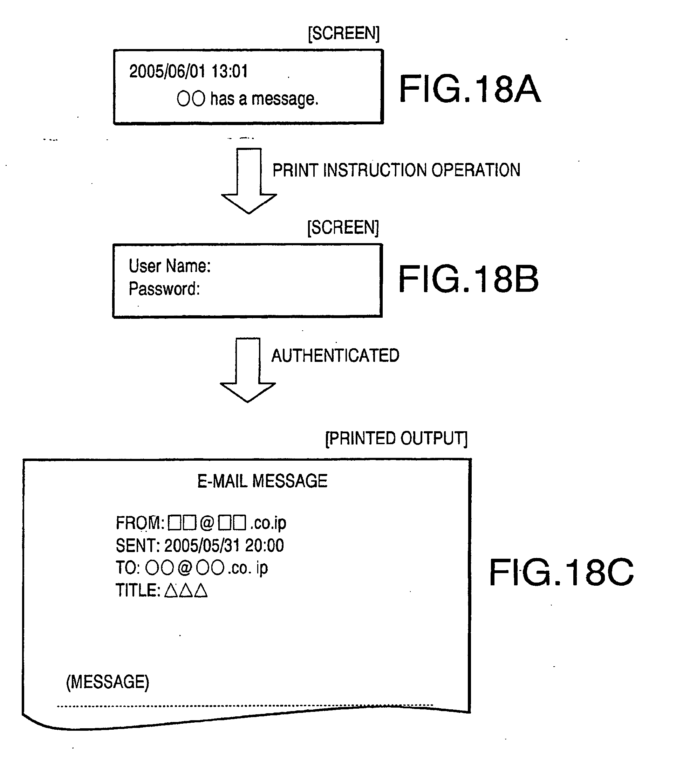

Next, in a third delivery data generating task, display delivery data that indicates an e-mail was received at a predetermined mail address (see Fig. 18A) and print delivery data that indicates a content of the received e-mail as a delivery data pair regarding an e-mail are generated (see Fig. 18C) and stored in the delivery data storage 35a. In the present embodiment, the delivery data generating task to generate a delivery data pair regarding the e-mail is executed correspondingly to respective e-mail addresses that have been previously registered.

Each delivery data generating task is assigned a unique application ID, which is included in display delivery data upon generation as identification of a data generator.

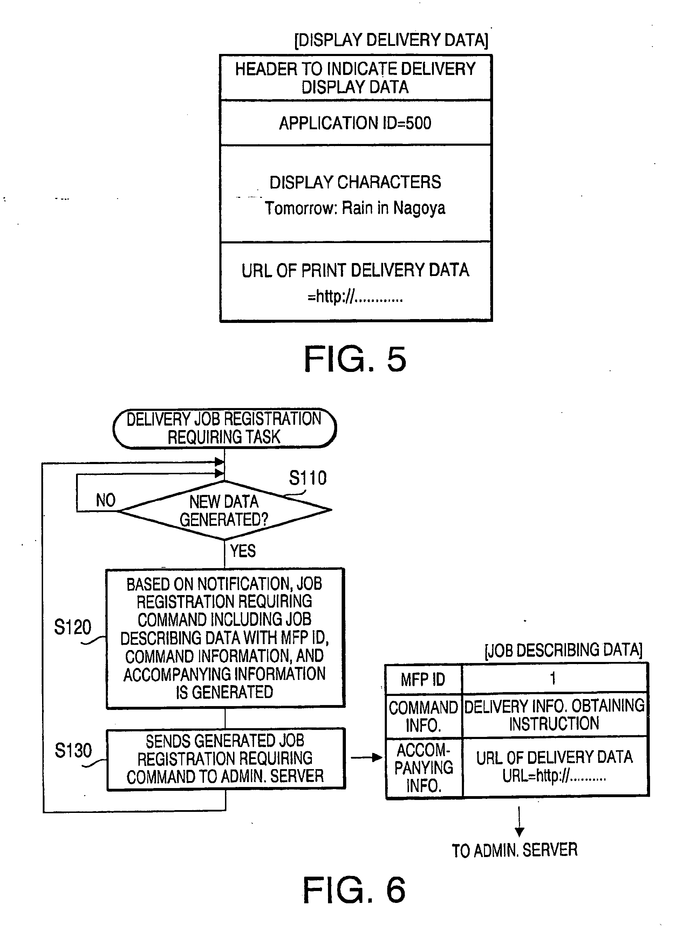

Fig. 5 shows a diagram to illustrate a configuration of the display delivery data generated in the delivery data generating task according to the embodiment of the invention. As shown in Fig. 5, the display delivery data includes a piece of header information, which indicates the delivered data is display delivery data, an application ID, which indicates a delivery data generating task as a data generator, character strings to be displayed as a content of the delivered information (hereinafter referred to as display characters), and a URL of print delivery data corresponding to the display delivery data.

The URL of the print delivery data (for example, character strings including "http://", an address of the delivery server, a path information of a folder as the delivery data storage, and a name of the delivery data) is included in the display delivery data in a process of the delivery data generating task upon generation of the above-mentioned delivery data pair having the display delivery data and the print delivery data therein. Therefore, in a process of delivery data generating task to generate the display delivery data without the print delivery data; a blank URL having no location information therein is included in the display delivery data.

Further, for example, one of the delivery data generating tasks that is adapted to generate printed delivery data generates data for printing that can be processed and printed as documents for example in PDF (portable document) format, in XML (extended markeup language) format, and in TXT (text) format by the printing unit 17.

For another example, one of the delivery data generating tasks that generates data with confidentiality that requires an authentication process of the user, such as the above-mentioned third delivery data generating task and a delivery data generating task that is adapted to generate delivery data for paid content, generates display delivery data having a brief summary of the delivered information as well as print delivery data having detailed information corresponding to the information in the display delivery data. Then identification of the generated print delivery data (for example, a name of the data) and an application ID assigned to the delivery data generating task are registered in the authentication requiring data list.

Further, when the delivery data is generated in the delivery data generating tasks and the generated delivery data is stored in the memory unit 35, completion of generating new delivery data is notified to a delivery job registration requiring task, which is executed by the control unit 31 in parallel with the delivery data generating task upon generation of each delivery data. Simultaneously, the MFP ID of the MFP 10 that is to receive the delivered data and an URL of the delivery data are notified to the delivery job registration requiring task.

When the delivery data generating task generates display delivery data and print delivery data as a pair, completion of generating new delivery data as well as an MFP ID and a URL of the display delivery data is notified to the delivery job registration requiring task, every time one of the pair (more specifically, the display delivery data) is generated, rather than every time both of the pair are generated.

Fig. 6 shows a flowchart and a diagram to illustrate the delivery job registration requiring task executed by the control unit 31 of the delivery server 30 according to the embodiment of the invention. A process that the control unit 31 executes during a delivery job registration requiring task will be described hereinbelow.

In the delivery job registration requiring task, the control unit 31 first waits until a notification to notify that new delivery data is generated in one of the delivery data generating tasks is received (S110). When the delivery job registration requiring task receives the notification (S110: YES), a job registration requiring command is generated according to a content of the notification (S120). The job registration requiring command includes command information with "delivery information obtaining instruction", the notified MFP ID, and job description data having URL information of the notified delivery data. The job registration requiring command is then sent to the administration server 50 via the communication unit 33 (S130). The process thereafter proceeds to S110.

When the job registration requiring command is received by the administration server 50, and a job corresponding to the command is registered (S330). When the job is executed by the administration server 50, a delivery information obtaining instruction is inputted to the MFP 10 that corresponds to the job. The corresponding MFP 10thereafter sends a requesting command for the delivery data to the delivery server 30 in response to the delivery information obtaining instruction.

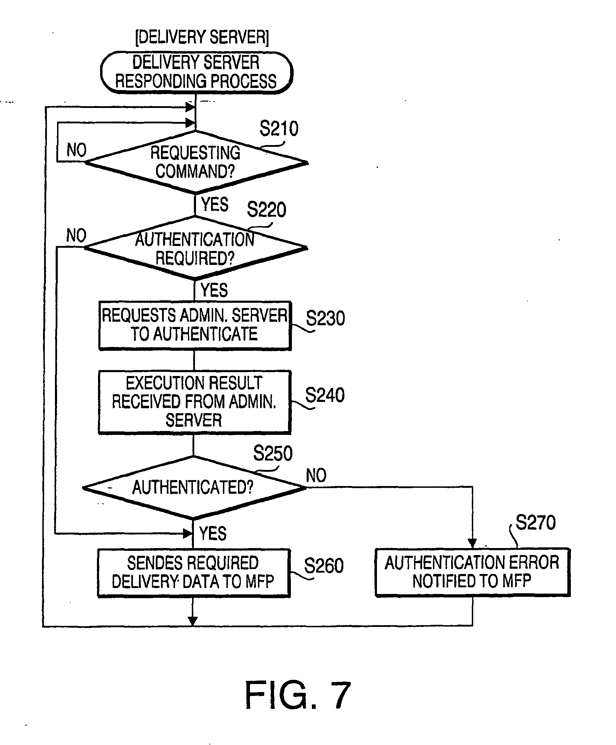

The requesting command for the delivery data from the MFP 10 to the delivery server 30 is processed by the control unit 31 as a delivery server responding process. Fig. 7 shows a flowchart to illustrate the delivery server responding process executed by the delivery server 30 according to the embodiment of the invention.

In the delivery server responding process, the control unit 31 waits until the requesting command for the delivery data from the MFP 10 is received via the communication unit 33 (S210). When the requesting command for the delivery data is received (S210: YES), the process determines whether an authentication as a preliminary procedure is required based on identification of required data (for example, a name of the data), which is indicated in the requesting command (S220).

In S220, more specifically, the control unit 31 examines the authentication requiring data list and judges whether the identification of the required data is registered therein. When the identification is registered, the process determines the authentication is required (S220: YES). When the identification is not registered, the process determines that the authentication is not required (S220: NO).

When the authentication is not required, the control unit 31 sends the required data to the MFP 10 that sent the requesting command previously via the communication unit 33 as a response to the requesting command for the delivery data (S260). The process thereafter proceeds to S210.

When the authentication is required (S220: YES), the control unit 31 requests the administration server 50 to execute an authentication process (S230). Simultaneously, the control unit 31 sends an execution requiring command for the authentication process to the administration server 50 via the communication unit 30. The execution requiring command includes a user ID and a password included in the requiring command for the delivery data that has been previously received, and an application ID corresponding to the required data that is indicated in the requiring command for the delivery data (i.e., the application ID registered in association with the identification of the required data in the authentication requiring data list).

It should be noted that when the authentication is required and the requesting command for the delivery data does not include a user ID and a password, a null value is included in an execution requiring command for the authentication process instead of the user ID and the password, and the execution requiring command is sent to the administration server 50.

Following S230, the process proceeds to S240. In S240, the control unit 31 waits until response data including an execution result of the authentication process is received from the administration server 50 via the communication unit 33. When the response data is received, the process examines the response data and judges whether the authentication was successful (S250). When the response data indicates that the authentication was successful (S250: YES), the control unit 31 sends the required data to the MFP 10 that had issued the requesting command for the delivery data previously in response to the requesting command via the communication unit 33 (S260). The process thereafter proceeds to S210.

In S250, when the response data from the administration server 50 indicates that the authentication has failed (S250: NO), the control unit 31 sends an error notification to notify the MFP 10 of an authentication error as a response to the requesting command for the delivery data that has been received previously from the MFP 10 via the communication unit 33 (S270). The process thereafter proceeds to S210.

Next, a configuration and operations of the administration server 50 will be described. As shown in Fig. 1, the administration server 50 includes a control unit 51, a communication unit 53, and a memory unit 55 having a hard disk drive. The control unit 51 is equipped with a CPU (not shown), a ROM (not shown), a RAM (not shown), and the like. The communication unit 53 is adapted to connect the administration server 50 to the computer network, and is capable of bi-directionally communicate with the other devices (i.e., the MFPs 10 and the delivery server 30) in the computer network.

The memory unit 55 is provided with an administration data storage 55a, wherein a job administrating table, a job describing table, and a user information administrating table are stored. The job administrating table is adapted to administrate jobs that are requested for registration by the delivery server 30. The job describing table is adapted to indicate each job registered in the job administrating table in detail. The user information administrating table is adapted to indicate user IDs and passwords of users that are previously registered.

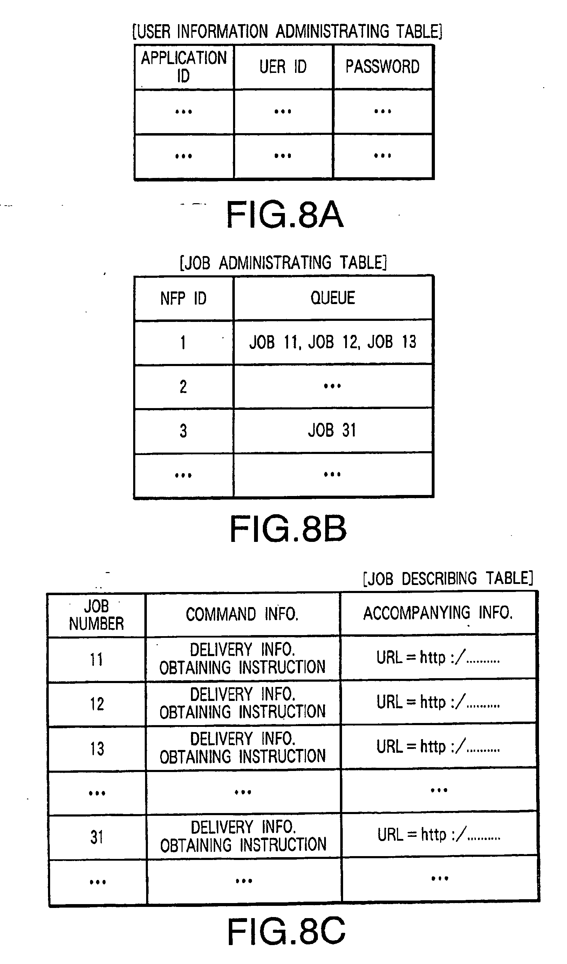

Fig. 8A shows a diagram to illustrate a configuration of the user information administrating table, Fig. 8B shows a diagram to illustrate a configuration of the job administrating table, and Fig. 8C shows a diagram to illustrate a configuration of the job describing table according to the embodiment of the invention.

The user information administrating table stored in the administration server 50 therein contains information such as user IDs and passwords that are registered in association with application IDs of delivery data generating tasks to generate the delivery data requiring an authentication, such as a task to generate delivery data regarding e-mails (see Fig. 8A). The job administrating table therein contains queues that stores job numbers for jobs executed for each of the MFPs 10 in the delivery system 1 of the present embodiment, and are registered in association with each MFP ID of the MFP 10 (see Fig. 8B). The job describing table includes job numbers, command information, accompanying information for each of the jobs registered in the job administrating table (see Fig. 8C).

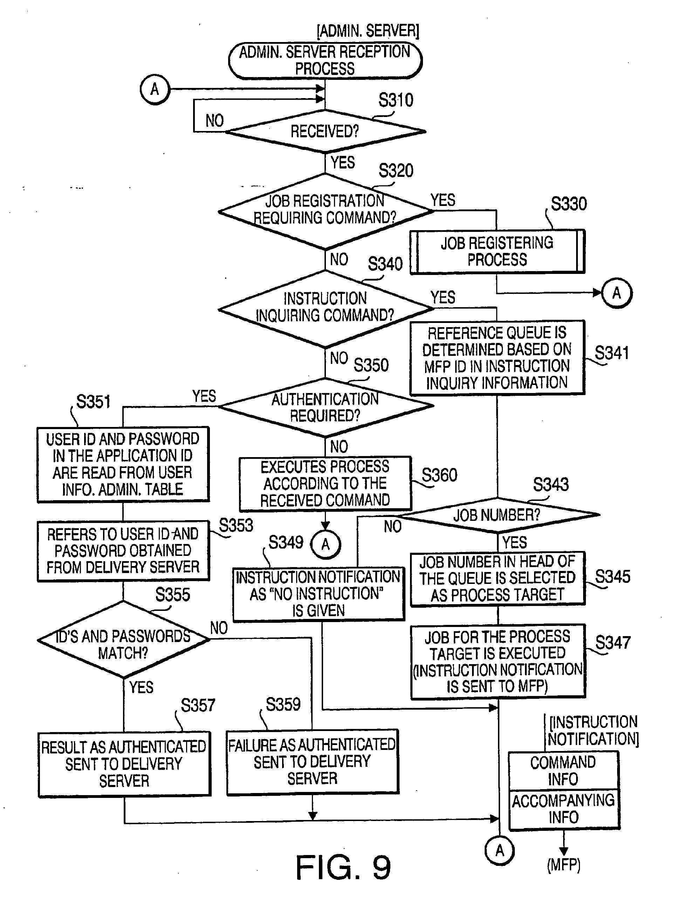

Fig. 9 shows a flowchart to illustrate the administration server reception process executed by the control unit 51 of the administration server 50 according to the embodiment of the invention. When a job registration requiring command is sent from the delivery server 30, the administration server 50 executes the administration server reception process shown in Fig. 9 to process the command and register the job.

When the administration server reception process is started, the control unit 51 of the administration server 50 waits until a command is sent from an external device. When the command is received in the control unit 51 via the communication unit 53 (S310:YES), the control unit 51 examines whether the received command is a job registration requiring command sent from the delivery server 30 (S320). When the received command is determined to be the job registration requiring command (S320: YES), the process proceeds to S330. In S330, the control unit 51 executes a job registering process to register a job number of the job in a queue corresponding to the MFP 10 for which the job is executed according to job describing data included in the received job registration requiring command.

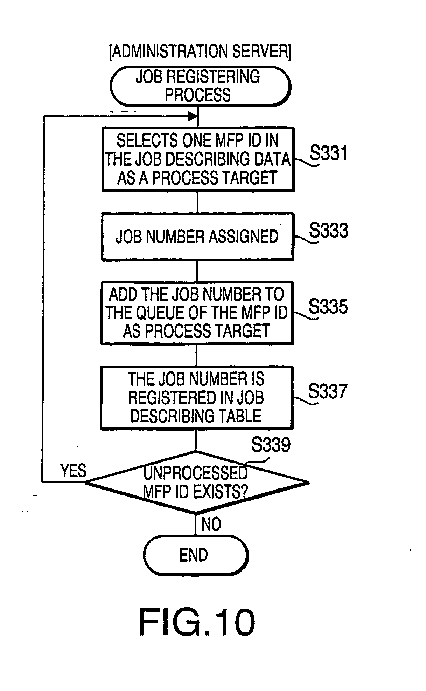

Fig. 10 shows a flowchart to illustrate the job registering process executed by the control unit 51 of the administration server 50 according to the embodiment of the invention. When the job registering process is started, the control unit 51 selects one of the MFP IDs in the job describing data as a process target (S331). Thereafter, referring to the job describing table, the control unit 51 determines an unused job number that is to be assigned to the new job (S333).

Following S333, the control unit 51 add the job number obtained in S333 to an end of the queue corresponding to the MFP ID as the process target (S335). Thereafter, the added job number is associated with command information and accompanying information and registered in the job describing table as job describing information (S337). The process proceeds to S339.

In S339, the control unit 51 examines the job describing information to judge whether any MFP ID that has not processed through the steps S331-S337 remains therein. When one or more MFP IDs are found (S339: YES), the process returns to S331. Thereafter the control unit 51 selects one of the MFP IDs in the job describing data as a process target (S331), and repeats the steps S332-S339 until no MFP ID is found in the job describing data as a remaining MFP ID.

When a plurality of MFP IDs are registered in the job describing data, the control unit 51 thus registers the jobs in the queue corresponding to each MFP ID. When the above-described process is applied to all of the MFP IDs registered in the job describing information, the control unit 51 judges that no MFP IP exists in the job describe information (S339: NO), and the process ends. Thereafter, the job registering process is completed and the process proceeds to S310. As the control unit 51 judges a command is received (S310: YES), the process proceeds to S320.

In S320, the control unit 51 examines the received command and when the received command is determined not to be a job registration requiring command from the delivery server 30 (S320: NO). Then, in S340, the control unit 51 examines whether the received command is an instruction inquiring command sent from an MFP 10. When the received command is determined to be an instruction inquiring command (S340: YES), the process proceeds to S341. In S341, based on an MFP ID included in the instruction inquiring command, the control unit 51 determines a queue corresponding to the MPF IP that has sent the instruction inquiry as a queue to be referenced (hereinafter referred to as a reference queue).

Following S341, the control unit 51 proceeds to S343, and examines the reference queue whether a job number is registered in the reference queue. When a job number is determined to be registered (S343: YES), a job number registered in a head of the queue is selected as a process target (S345), and a job corresponding to the selected job number is executed (S347). More specifically, in S347, the control unit 51 reads command information and accompanying information associated with the selected job number from the job describing table, and send an instruction notification having the command information and the accompanying information therein to the MFP 10 as the sender of the instruction inquiry. Following S347, the process returns to S310.

In S343, when the control unit 51 determines a job number is not registered in the reference queue (S343: NO), the process proceeds to S349. In S349, an instruction notification to indicate no instruction is given is generated, and sent to the MFP 10 as the sender of the instruction inquiry via the communication unit 53. The process thereafter returns to S310.

In S340, when the received command is determined not to be an instruction inquiring command sent from the MFP 10 (S343: NO), the process proceeds to S350, and examines whether the received command is an execution requesting command of the authentication process sent from the delivery server 30. When the received command is determined to be an execution requesting command (S350: YES), the process proceeds to S351.

In S351, based on an application ID included in the execution requesting command, the control unit 51 reads a user ID and a password registered in association with the application ID from the user information administrating table, and refers to an user ID and a password included in the execution requesting command from the delivery server 30 for the read user ID and the password in the user information administrating table (S353).

When the user IDs and the passwords of the two match (S355: YES), the control unit 51 sends a response that indicates an authentication result as authenticated to the delivery server 30 as the sender of the execution requesting command of the authentication (S357). Thereafter the process returns to S310. When the user IDs and the passwords of the two do not match (S355:NO), the control unit 51 sends a response that indicates an authentication result as failed to the delivery server 30 as the sender of the execution requesting command of the authentication (S359). The process thereafter returns to S310.

In S350, when the received command is determined not to be an execution requesting command (S350: NO), the process proceeds to S360, and executes a process corresponding to the other command. The process thereafter returns to S310.

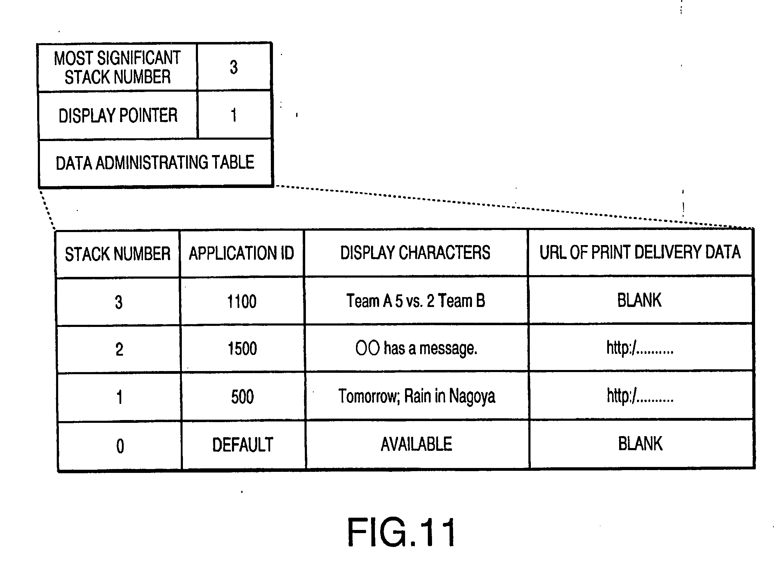

Next, a configuration and operations of the MFP 10 will be described. Fig. 11 shows diagrams to illustrate a configuration of data to be stored in the memory unit 23 of the MFP 10 according to the embodiment of the invention. The memory unit 23 of the MFP 10 therein includes data indicating a most significant stack number, a display pointer, and a data administrating table.

The MFP 10 is adapted to display an image with text corresponding to each unit of display delivery data for example as shown in Figs. 2A and 2B on the display unit 21 according to an instruction from the user. Here, the most significant stack number, the display pointer, and the data administrating table stored in the memory unit 23 are data used for the control unit 11 to execute an operation for displaying the image with text corresponding to the display delivery data.

The data administrating table is used for administrating display delivery data received from the delivery server 30, and is configured to store therein stack numbers, a plurality of units of stack data including application IDs, display characters, URLs of print delivery data, as shown in Fig. 11.

It should be noted that the application IDs, the display characters, and the URLs of the print delivery data in the stack data are generated based on display delivery data obtained from the delivery server 30. The stack numbers are numbers to be used for administrating output of the display delivery data in a stacked structure, and each unit of the stack data is assigned a unique stack number. It should be noted that a stack data unit with a stack number 0 is not generated based on the display delivery data received from the delivery server, but is used as a default setting for displaying a default screen.

The most significant stack number in the memory unit 23 indicates a most significant number among the stack numbers assigned to the plurality of stack data units in the data administrating table. In the present embodiment, the most significant stack number is adapted to be a smaller number by one than the number of the units of stack data registered in the data administrating table. The display pointer indicates a stack data unit to be processed for displaying, and corresponds to any of the stack numbers assigned to the stack data units registered in the data administrating table (i.e., any integer from 0 to the most significant stack number in the data administrating table). A default value of the display pointer is set to 0.

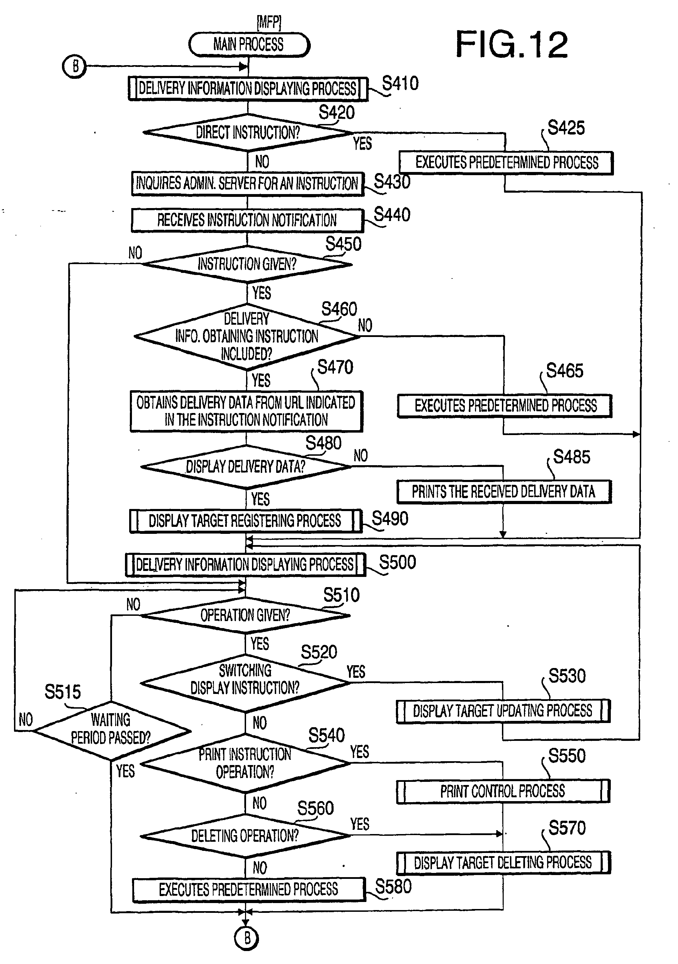

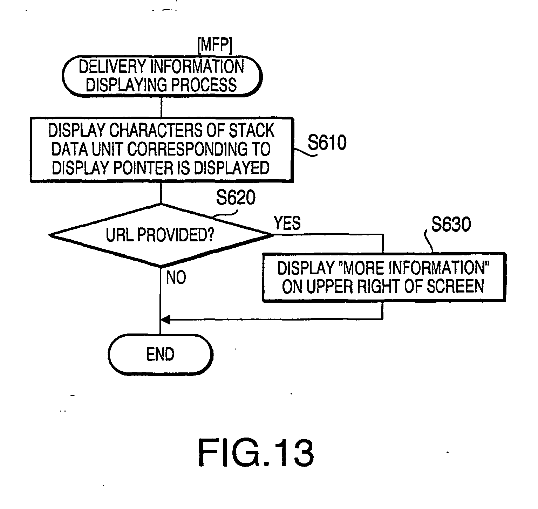

Next, processes to be executed by the control unit 11 of the MFP 10 based on programs will be described. Fig. 12 shows a flowchart to illustrate a main process executed by the control unit 11 of the MFP 10 after the MFP 10 is started up according to the embodiment of the invention. Fig. 13 shows a flowchart to illustrate a delivery information displaying process executed by the control unit 11 of the MFP 10 in the main process according to the embodiment of the invention.

When the main process is started, first, in S410 the control unit 11 executes a delivery information displaying process, shown in Fig. 13. In the delivery information displaying process, the control unit 11 displays on the display unit 21 an image with text including the display characters that indicate a content of the stack data unit, of which number corresponds to the display pointer stored in the memory unit 23 (S610). Thereafter, the control unit 11 examines whether a URL of the print delivery data included in the stack data unit is blank URL (i.e., a null value) (S620). When the URL information is determined to be blank and no URL is contained (S620: NO), the control unit 11 terminates the process without displaying the character strings to indicate the existence of detailed information, such as "more information" on a predetermined position, for example on an upper right, of the display unit 21. When the URL information is contained in the stack data unit (S620: YES), the control unit 11 displays the character strings such as "more information" on the upper right of the display unit 21 (S630), and terminates the process.

Following the delivery information displaying process (S410), the main process proceeds to S420. In S420, the control unit 11 examines whether a direct instruction is given from an external device. The "direct instruction" in the present embodiment refers to an instruction other than instructions given via the administration serer 50. For example, direct instructions may include a scan instruction (i.e., an instruction to manipulate a scanning function of the MFP 10) and a copy instruction (i.e., an instruction to manipulate a copying function of the MFP 10) that are inputted by the user operation to the operation unit 19 of the MFP 10, and a print instruction that is sent from an external PC (personal computer) along with image data to be printed.

When the control unit 11 determines that the direct instruction is given (S420:
YES), the control unit 11 performs a predetermined process that corresponds to the given instruction (S425). The process thereafter proceeds to S500.

When the control unit 11 determines that no direct instruction is given (S420: NO), the control unit 11 inquires the administration server 50 for an instruction by sending the instruction inquiring command including the MFP ID of the MFP 10 to the administration server 50 via the communication unit 13 (S430). The control unit 11 thereafter receives the instruction notification as a response from the administration server 50 (S440).

When the instruction notification is received, the control unit 11 examines whether the received data is the notification to indicate no instruction is given (S450). When the control unit 11 determines that the notification indicates no instruction is given (S450: NO), the process proceeds to S510. When the control unit 11 determines that the notification indicates an instruction is given (S450: YES), the process proceeds to S460.

In S460, the control unit 11 examines whether the command information of the received instruction notification contains delivery information obtaining instruction. When the control unit 11 determines that the delivery information obtaining instruction not to be contained (S460: NO), the control unit 11 performs a predetermined process that corresponds to the command information in the received instruction notification (S465). The process thereafter proceeds to S500.

In S460, when the control unit 11 determines that the delivery information obtaining instruction is contained in the command information of the received instruction notification (S460: YES), the process proceeds to S470. In S470, the control unit 11 sends a requesting command for delivery data including identification (for example, a name of the data) of the required data based on a URL indicated in the accompanying information of the instruction notification to the delivery server 30 via the communication unit 13. Further, as a response, the control unit 11 receives the delivery data corresponding to the URL indicated in the accompanying information from the delivery server 30 via the communication unit 13.

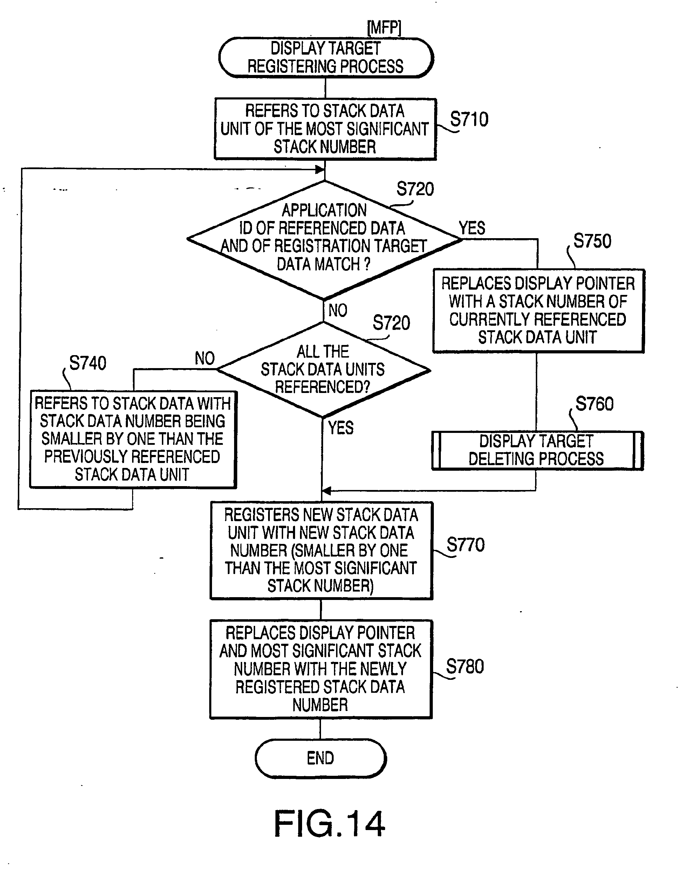

The control unit 11 thereafter examines whether the received delivery data is display delivery data based on header information and the like of the received data (S480). When the received data is determined not to be display delivery data (S480: NO), the control unit 11 forwards the received data to a printing process (S485). In S485, the control unit 11 manipulates the printing unit 17 to print an image based on the delivery data. The process thereafter proceeds to S500. When the received data is determined to be display delivery data (S480: YES), the control unit 11 sets the display delivery data obtained in S470 as target data to be registered, and executes a display target registering process to the target data (S490). Fig. 14 shows a flowchart to illustrate the display target registering process executed by the control unit 11 of the MFP 10 according to the embodiment of the invention.

In the display target registering process, first, the control unit 11 refers to a stack data unit having the most significant stack number in the data administrating table stored in the memory unit 23 as a currently referenced stack data unit (S710). Thereafter, the control unit 11 examines whether an application ID in the referenced stack data and an application ID of the display delivery data as the registration target match (S720).

When the two application IDs do not match (S720: NO), the control unit 11 examines whether all of the remaining stack data units in the data administrating table are referenced (S730). When the control unit 11 determines that there are stack data units that are not yet referenced (S730: NO), the process proceeds to S740. In S740, the control unit 11 refers to a stack data unit with a stack number that is smaller by one than the stack number of the previously referenced stack data unit as a currently referenced stack data unit. The process thereafter returns to S720, and the control unit 11 examines whether an application ID in the currently referenced stack data and an application ID of the display delivery data as the registration target match (S720).

When the two application IDs are determined to match (S720: YES), the process proceeds to S750. In S750, the control unit 11 replaces a value as the display pointer stored in the memory unit 23 with a stack number of the currently referenced stack data unit with the application ID that has matched the application ID indicated in the display delivery data as the registration target. Thereafter, in S760, the control unit 11 executes a display target deleting process. It should be noted that in the present embodiment an application ID assigned to a stack data unit with a stack number 0 is not used in the delivery server 30, therefore, an application ID contained in display delivery data as the registration target is not adapted to match an application ID of a stack data unit with a stack data number 0.

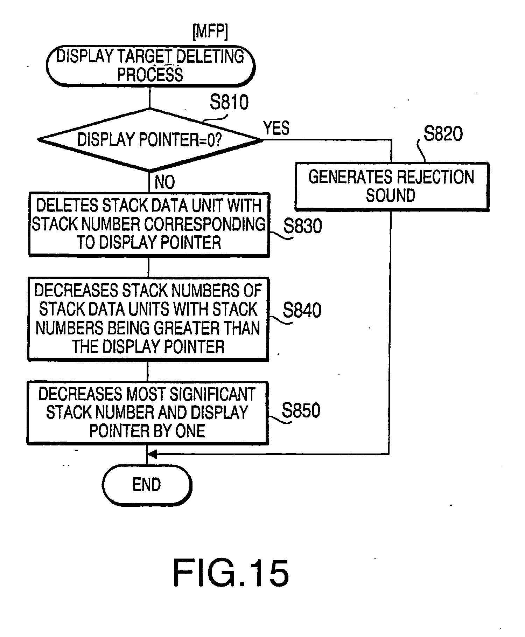

Fig. 15 shows a flowchart to illustrate the display target deleting process executed by the control unit 11 of the MFP 10 according to the embodiment of the invention. In the display target deleting process, the control unit 11 examines whether the display pointer stored in the memory unit 23 indicates 0 (S810). When the display pointer indicates 0 (S810: YES), a rejection sound to the user is generated (S820), and the process terminates. When the display pointer indicates the other value than 0 (S810: NO), the process proceeds to S830.

In S830, the control unit 11 removes the stack data unit with the stack number corresponding to the value as the display pointer from the data administrating table, and decreases each of the stack numbers of the stack data units that are greater than the display pointer by one (S840). Further, in S850, the control unit 11 replaces the most significant stack number and the display pointer with values that are smaller by one than the most significant stack number and the display pointer stored in the memory unit 23. Thereafter, the display target deleting process terminates.

Following the display target deleting process, the process proceeds to S770 (see Fig. 14). In S770, the control unit 11 determines a new stack number to be assigned to a newly registered stack data unit is a value that is smaller by one than the most significant stack number stored in the memory unit 23. Thereafter, the control unit 11 generates a new stack data unit including the new stack number, an application ID included in the display delivery data to be registered, display characters, and a URL of the print delivery data to register in the data administrating table.

Upon completion of the registration in S770, the process proceeds to S780. In S780, the control unit 11 replaces the display pointer and the most significant stack number in the memory unit 23 with the stack number of the stack data unit that has been newly registered in S770. The display target registering process thereafter terminates, and returns to S490 (see Fig. 12).

Following S490, the process proceeds to S500. In S500, the control unit 11 executes the delivery information displaying process shown in Fig. 13 to display an image with text that includes the character strings contained in the stack data unit with the stack number corresponding to the current display pointer on the display unit 21.

Following S500, the control unit waits until an operation from the user is inputted via the operation unit 19 of the MFP 10 (S510) or a predetermined waiting period is passed (S515). When an operation is inputted (S510: YES), the control unit examines whether the operation is a switching display instruction, which is, more specifically, an operation to a cursor key (S520). When the operation is determined to be a switching display instruction (S520: YES), the process proceeds to S530 to execute a display target updating process.

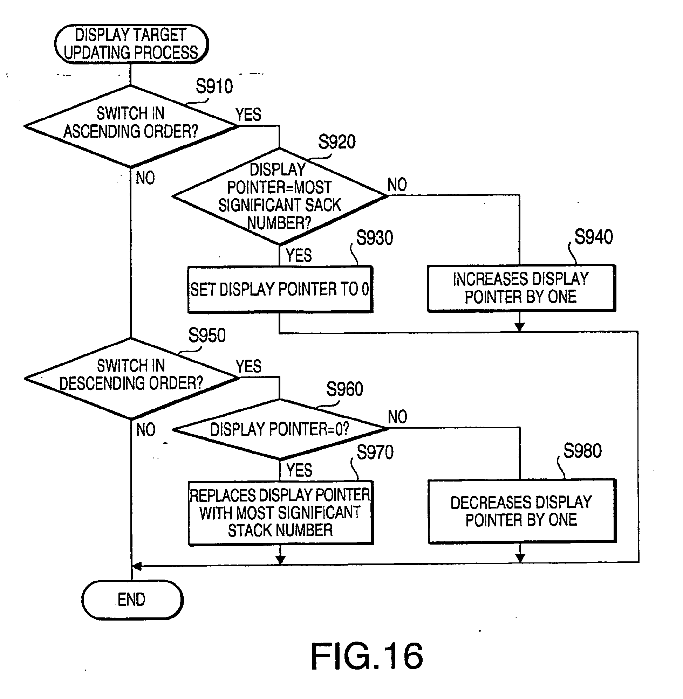

Fig. 16 shows a flowchart to illustrate the display target updating process executed by the control unit 11 of the MFP 10 according to the embodiment of the invention. In the display target updating process, first, the control unit 11 examines whether the operation inputted by the user is an operation to switch a stack data unit as the display target in an ascending order of the stack data number (S910). When the operation is determined to be a switching operation in the ascending order (S910: YES), the control unit 11 examines whether the current value of the display pointer matches the most significant stack number (S920). When the value of the display pointer matches the most significant stack number (S920: YES), the control unit 11 increases the value as the display pointer by one (S940). The display target updating process thereafter terminates.

When the operation by the user is determined not to be a switching operation in the ascending order (S910: NO), the process proceeds to S950. In S950, the control unit 11 examines whether the operation inputted by the user is an operation to switch a stack data unit as the display target in an descending order of the stack data number. When the operation is determined to be a switching operation in the descending order (S950: YES), the control unit 11 examines whether the display pointer indicates 0 (S960). When the display pointer indicates 0 (S960: YES), the control unit 11 replaces (updates) the value of the display pointer with a value corresponding to the most significant stack number (S970). When the display pointer indicates a value as a current display pointer that is greater than 0 (S960: NO), the control unit 11 replaces (updates) the value with a value smaller by one than the current display pointer (S980). The display target updating process thereafter terminates. In S950, when the operation is determined not to be a switching operation in the descending order (S950: NO), the control unit 11 determines the operation as an error, and terminates the process without accepting the operation.

Upon completion of the display target updating process, the process returns to S500 (see Fig. 12). In S500, control unit 11 displays the character strings contained in the stack data unit that corresponds to the updated display pointer on the display unit 21 of the MFP 10. The process thereafter proceeds to S510. In S510, the control unit 11 waits until an operation from the user is inputted via the operation unit 19 of the MFP 10 (S510). When no operation is inputted (S510: NO), the control unit 11 waits until a predetermined waiting period is passed (S515). When the waiting period is passed (5515: YES), the process returns to 5410, and examines whether a direct instruction is given through the process following S420.

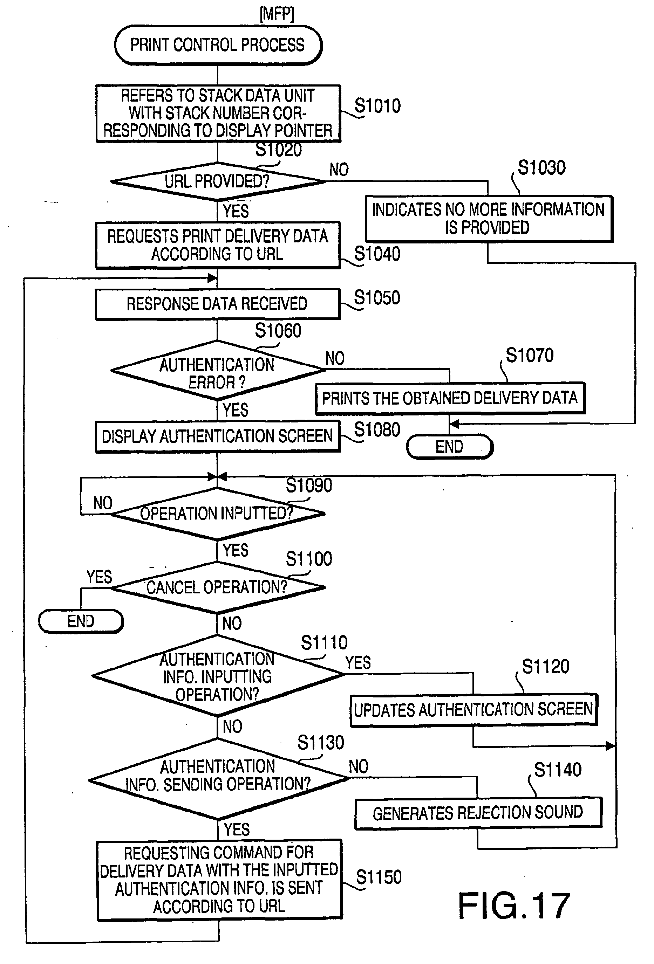

In S510, when an operation is inputted by the user before the predetermined waiting period is passed (S510: YES), the process proceeds to S520. In S520, the control unit examines whether the operation is a switching display instruction. When the operation is determined not to be a switching display instruction (S520: NO), the process proceeds to S540. In S540, the control unit 11 examines whether the operation is a print instruction operation (for example, a depressing operation to a print instruction button). When the operation is determined to be the print instruction operation (S540: YES), the control unit 11 executes a print control process shown in Fig. 17 (S550).

Fig. 17 shows a flowchart to illustrate the print control process executed by the control unit 11 of the MFP 10 according to the embodiment of the invention. In the print control process, first, the control unit 11 refers to a stack data unit with a stack number corresponding to a value of the display pointer stored in the memory unit 23 (S1010). The control unit 11 thereafter examines whether a URL of print delivery data contained in the stack data unit is blank (S1020). When the URL is determined to be blank, i.e., no URL is provided (S1020: NO), the process proceeds to S1030, and displays a message indicating no more information is provided on the display unit 21. The print control process thereafter terminates.

When the URL is determined to not be blank i.e., the URL is provided (S1020:
YES), the process proceeds to S1040. In S1040, based on the URL as a locator of the print delivery data, which is contained in the stack data unit with the stack number corresponding to the display pointer, the control unit 11 sends a requesting command for delivery data including identification (for example, a name of the data) of the required data to the delivery server 30 via the communication unit 13. It should be noted that, in S1040, the user ID and the password are not included in the requesting command.

Further, as a response, the control unit 11 receives response data from the delivery server 30 via the communication unit 13 (S1050). Thereafter, the control unit examines the response to judge whether an authentication error has occurred (S1060). In S1060, the control unit 11 determines the authentication error has occurred when the error notification is sent from the delivery server 30 in S270 and the control unit 11 receives the same (S1060: YES). When the control unit 11 receives the other response than the error notification, which is the requested print delivery data, the control unit 11 determines that no authentication error has occurred (S1060: NO).

When the control unit 11 determines that no authentication error has occurred (S1060: NO), the control unit 11 processes the received delivery data for printing, and provides the printing unit 17 with the print delivery data so that an image with text corresponding to the print delivery data is printed (S1070). The print control process thereafter terminates.

When the control unit 11 determines that the authentication error has occurred (S1060: YES), the process proceeds to S1080. In S1080, the control unit 11 displays an authentication screen, wherein the user inputs a user ID and a password for authentication, on the display unit 21.

Figs. 18A-18C show illustrative views of screens and a printed output when the print delivery data is received according to the embodiment of the invention. Fig. 18A shows an example of an e-mail screen on which the display delivery data that indicating an e-mail was received at a predetermined mail address is displayed. Fig. 18B shows an example of the authentication screen. Fig. 18C shows an example of printed output on which the content of the received print delivery data is indicated.

When the character strings contained in the stack data unit with the stack number 2 (see Fig. 11) is displayed on the display unit 21 of the MFP 10, as shown in Fig. 18A, and the print instruction operation from the user is inputted (S540: YES), the control unit 11 executes the print control process in S550 (see Fig. 12). In the print control process, the requesting command for the delivery data, which is stored as indicated by the URL of the print delivery data contained in the stack data unit with the stack number 2, is sent to the delivery server 30 in S 1040 (see Fig. 17). It should be noted that a delivery data generating task that generates display delivery data for the stack data unit with the stack number 2 (as one of the delivery data pair) is adapted have the identification (for example, the name of the data) of the print delivery data (as the other of the delivery data pair) registered in the authentication requiring data list. As mentioned above, in S1040, the user ID and the password are not included in the requesting command. Therefore, in response to the requesting command in S1040, an error notification to notify an authentication error is sent from the delivery server, and the control unit 11 receives the same. Thereafter, in S1080, the control unit 11 displays the authentication screen, as shown in Fig. 18B, wherein the user inputs a user ID and a password for authentication, on the display unit 21.

The process thereafter proceeds to S1090. In S 1090, the control unit 11 waits until an operation by the user via the operation unit 19 is inputted. When an operation is inputted (S1090: YES), the control unit 11 examines whether the operation is a canceling operation to cancel the printing instruction (S 1100). When the operation is determined to be a canceling operation (S 1100: YES), the print control process terminates and the control unit 11 invalidates the print instruction operation.

When the operation is determined not to be a canceling operation (S 1100: NO), the control unit 11 examines whether the operation is an authentication information inputting operation by the user to input the user ID and the password (S1110). When the operation is determined to be an authentication information inputting operation (S 1110: YES), the control unit 11 updates the authentication screen according to the information inputted so that the operation result, i.e., the user ID and the password, is displayed in the authentication screen (S1120). The process thereafter proceeds to S1090, wherein the control unit 11 waits until a subsequent operation is inputted by the user.

When the operation inputted by the user is determined to be neither a canceling operation (S 1100: NO) nor an authentication information inputting operation (S 1110: NO), the process proceeds to S1130. In S1130, the control unit 11 examines whether the operation from the user is an authentication information sending operation, which is an operation to send the user ID and the password to the delivery server 30. When the operation is determined not to be an authentication information sending operation (S1130: NO), the control unit 11 determines the operation to be an unknown operation and generates a rejection sound (S1140). The process thereafter proceeds to S1090.

When the operation is determined to be an authentication information sending operation (S1130: YES), the process proceeds to S1150. In S1150, based on the URL as the locator of the print delivery data, which is contained in the stack data unit with the stack number corresponding to the display pointer, the control unit 11 sends a requesting command for the delivery data including identification (for example, the name of the data) along with the user ID and the password inputted by the user in S1110 to the delivery server 30 via the communication unit 13. The process thereafter returns to S 1050, wherein the control unit 11 receives response data as a response from the delivery server 30 via the communication unit 13 (S1050). When an error notification as the response data is received (S1060: YES), the control unit 11 displays once again the authentication screen, wherein the user inputs a user ID and a password, on the display unit 21 (S1080).

When the delivery server 30 receives the requesting command with the correct user ID and the password, and authenticates the same successfully, the delivery server 30 sends the print delivery data requested by the MFP 10, and the control unit 11 determines that no authentication error has occurred (S1060: NO). The process thereafter proceeds to S1070, and the control unit 11 processes the received print delivery data so that an image with text according to the print delivery data is printed via the printing unit 17. In the present embodiment, as shown in Fig. 18A, when an image with text according to the display delivery data contained in the stack data unit with the stack number 2 is displayed on the display unit 21 of the MFP 10, the print control process starts by the print instruction operation from the user (S550, see Fig. 12). Further, in the print control process, upon the authentication the print delivery data as the detailed information of the e-mail message from the delivery server 30 is output to be printed via the printing unit 17 as shown in Fig. 18C.

Upon completion of the print control process in S550, the process proceeds to S570, and the control unit 11 executes the display target deleting process shown in Fig. 15. In the display target deleting process, the control unit 11 deletes the stack data unit, which was referred to when the print delivery data was obtained, from the data administrating table. The process thereafter returns to S410.

In S540, when the control unit 11 determines the operation from the user is not a print instruction operation (S540: NO), the process proceeds to S560, and the control unit 11 examines whether the operation is a deleting operation of the stack data unit. When the operation is a deleting operation (S560: YES), the control unit 11 executes the display target deleting process shown in Fig. 15. The process thereafter returns to S410.

When the operation is determined not to be a deleting operation (S560: NO), the process proceeds to S580, and the control unit 11 executes a predetermined process corresponding to the operation (for example, generates a rejection sound). The process thereafter returns to S410.

As described above, the delivery system 1 of the present embodiment is provided with the MFP 10 as an image output device capable of outputting images, and the MFP 10 is provided with an LCD as the display unit 21, and a printing unit 17 that is capable of outputting images by printing in a higher resolution than a screen resolution of the display unit 21. Further, the delivery server 30 is provided with the display delivery data as delivery data used to be output on the display 21 and the print delivery data as delivery data to be printed via the printing unit 17. The delivery server 30 is furthermore adapted to generate some of the display delivery data having character strings that indicate a summary of the delivered information contained in the print delivery data and the URL as the locator of the print delivery data, which are associated with each other.

The MFP 10 is adapted to obtain the delivery data from the delivery server 30 based on the delivery information obtaining instruction sent from the administration server 50, which administrates delivery operation of delivery data generated by the delivery server 30 (S430-S470). When the received data is display delivery data (S480: YES), the display delivery data is stored in a stack data unit and registered in the administration table (S490). Further, based on the stack data unit, an image with text indicating the character strings contained in the display delivery data is displayed on the display unit 21 according to an instruction from the user (S500-S530).

The MFP 10 furthermore is adapted to refer to the URL, as a locator of the print delivery data, contained in the stack data unit that is in association with the character strings shown on the display 21 and obtain the print delivery data as detailed information from the delivery server 30 (S1050). When the print delivery data is obtained, the MFP 10 processes the same and outputs an image with text based on the print delivery data via the printing unit 17 of the MFP 10 (S1070).

As described above, the delivery system 1 of the present embodiment is adapted to generate delivery data in accordance with the capabilities of the display unit 12 and the printing unit 17. That is, when data volume of the delivery data is too large to be displayed on one screen of the display unit 21 at a time, delivery data as a pair of display delivery data and print delivery data is generated, while the display delivery data is provided with a summarized content and the print delivery data is provided with detailed information.

With this configuration, the MFP 10 is capable of displaying an image with text indicating the summarized information that is readable and recognizable suitably on the display unit 21 prior to printing. Further, the user can view and examine the content of the delivery data prior to printing.

Therefore, the MFP 10 in the present embodiment can output the detailed information of the delivery data by operating the printing unit 17 that is capable of supporting higher resolution merely when the print instruction is given by the user via the operation unit 19 in multiple steps. In other words, when the detailed information is not required to be printed, undesired printing operation can be omitted and cost for printing is effectively reduced. Therefore, the user can obtain the images output by using a preferable output unit among a plurality of units equipped to the MFP 10.

It should be noted that, in a conventional output device, a print preview screen with a substantial volume of data is displayed on an LCD with lower resolution. Accordingly, when the image data is processed, merely a small part of the image can be shown, and the user may not find the function of the print preview screen beneficial. Therefore, the user may often gives an print instruction to the device without viewing the print preview screen to confirm the contents shown on the LCD, which may cause waste of printing media. With the MFP 10 of the present embodiment, such waste can be reduced.

The MFP 10 is adapted to obtain the print delivery data merely when the print instruction is inputted by the user. Therefore, when output of the print delivery data is not required, the user is allowed to select not to provide the MFP 10 with the print instruction so that no unnecessary information is transmitted from the delivery server 30, and process load to the delivery system 1 can be diminished.

In the MFP 10 of the present embodiment, when a URL as a locator of print delivery data is included in display delivery data, the user is notified of the existence of the print delivery data by character strings such as "more information" displayed on the upper right of the screen before the stack data unit containing the URL is processed to be displayed (S630). When the URL is not included in the display delivery data, on the other hand, no character strings to indicate the existence of the URL are displayed (S620: NO) so that the user can be notified of absence of print delivery data. With this configuration, when no print delivery data is provided, the user can be prevented from improperly giving a print instruction to the MFP 10, erroneously believing the print delivery data exists, and misunderstanding that the MFP 10 is not properly functioning. It should be noted that, in the present embodiment, the step S1030 is provided for confirmation to notify the user of the absence of the print delivery data, however, when the print control process is not provided with step S1030, the configuration to notify the user of the absence of the print delivery data in the method described above becomes even more effective.

In the delivery system 1 of the present embodiment, when the delivery server 30 receives a requesting command for delivery data sent from the MFP 10 in the print control process, the delivery server 30 is adapted to examine whether an authentication for delivery of the print delivery data is required (S220). When the authentication is required (S220: YES), the delivery server 30 requests the administration server 50 to execute the authentication process. Subsequently, the administration server 50 examines the user identification (i.e., the user ID and the password) inputted by the user via the MFP 10, and determines the user is an authorized user registered in the user information administrating table (S351-S359). When the user is determined to be an unauthorized user (S355: NO), the administration server 50 sends a notification to indicate that the authentication has failed to the delivery server 30, so that the delivery server 30 does not send the requested print delivery data to the MFP 10.

With this configuration, a print instruction from the unauthorized user is not accepted, and the unauthorized user is not allowed to have the print delivery data to be printed. Accordingly, delivery data that requires privacy, such as an e-mail message, can be delivered to the authorized user in the secure manner.

Although examples of carrying out the invention have been described, those skilled in the art will appreciate that there are numerous variations and permutations of the image output apparatus, the image output system, and the program that fall within the spirit and scope of the invention as set forth in the appended claims. It is to be understood that the subject matter defmed in the appended claims is not necessarily limited to the specific features or act described above. Rather, the specific features and acts described above are disclosed as example forms of implementing the claims.

It should be noted that, for example, the functions to be achieved by the administration server 50 may be incorporated in the delivery server 30, and vice versa. For another example, generating and storing the delivery data, and job registration may be performed manually by a user.

It should be further noted that, in the present embodiment, authentication of the user is achieved by registering the print delivery data that requires the authentication in the authentication requiring data list. However, equivalent authentication may be achieved in another method. For example, by having information to indicate the print delivery data requires the authentication and user identification as the recipient of the print delivery data stored in the print delivery data as a header, when the delivery data including the print delivery data is required by the MFP 10, the control unit 31 may examine the header of the requested print delivery data. When the header indicates includes the information to indicate the print delivery data requires authentication for printing, the delivery server 30 may send an execution requesting command having the user identification to the administration server 50, so that the administration server 50 can execute the authentication.

For another example, the display delivery data may include a URL for CGI program for authentication with the user ID and the identification (for example, the name of the data) of the requested data arguments, as the URL as the locator of the print delivery data, so that a necessary authentication process can be executed without using the authentication requiring data list.

## Claims

1. An image output apparatus (10), comprising:
a first image output device (21), which is adapted to output a first image;
a second image output device (17), which is capable of outputting a second image in a higher resolution than a resolution of the first image output device (21);
a first obtaining system (11),
a first controlling system (11), which is adapted to control outputting the first image based on first data obtained by the first obtaining system, by the first image output device (21);
a second obtaining system (11);
a second controlling system (11), which is adapted to control outputting the second image based on second data obtained by the second obtaining system, by the second image output device (17) when the second obtaining system (11) obtains the second data;
**characterized in that**:
the first obtaining system is adapted to obtain the first data and locator information that are stored in association with each other in a storing unit (30), the first data being used for outputting the first image by the first image output device (21), the locator information indicating a location of the second data, the second data being in association with the first data and used for outputting the second image by the second image output device (17),
the first controlling system (11) is further adapted to control outputting a notification concerning location information based on the locator information obtained from the first obtaining system, by the first image output device (21), and
the second obtaining system is adapted to obtain the second data according to the locator information obtained by the first obtaining system (11) from the storing unit (30),
wherein the second data is obtained when the first image based on the first data and the notification concerning the location information are output by the first image output device (21), and an output instruction is given by a user to the second image output device (17) based on the first data being output by the first image output device (21).

2. The image output apparatus (10) according to claim 1, comprising an input device that is adapted to be operated by a user for an inputting operation,
wherein the second obtaining system (11) is adapted to obtain the second data associated with the first data in response to the output instruction from the user to the second image output device (17) being input to the input device.

3. The image output apparatus (10) according to claim 1 or 2, wherein the first controlling system (11) is adapted to output the first image indicating absence of the locator information from the first image output device (21) when the first obtaining system obtains the first data but lacks the locator information associated with the first data.

4. The image output apparatus (10) according to any of claims 1-3,
wherein the first image output device (21) is a display device that optically outputs an image, and
wherein the second image output device (17) is a printing device that prints an image on a recording medium.

5. An image output system (1), comprising:
the image output apparatus (10) according to claim 2;
a server (30) having a storing unit (35) to store therein the first data and the locator information that are in association with each other and delivered to the image output apparatus (10) to be output by the first image output device (21), and the second data that is in association with the first data and delivered to the image output apparatus to be output by the second image output device (17) in response to the output instruction from the user,
wherein the delivery of the first data, the locator information, and the second data is administrated by an administration system.

6. An image output system (1), comprising:
the image output apparatus (10) according to claim 2;
an authentication system (31, 50), which is adapted to execute an authentication process to judge whether the user is an authorized user based on identification information of the user inputted via the input device; and
an output controlling system, which is adapted to control outputting the second image based on the second data that has been attempted to be obtained in response to the output instruction from being output by the second image output device (17) when the authentication system (31, 50) judges whether the user is an authorized user.

7. The image output system (1) according to claim 6,
wherein the output controlling system includes an output preventing system, which is adapted to prevent the second image based on the second data that has been attempted to be obtained in response to the output instruction from being output by the second image output device (17) when the authentication system (31, 50) determines that the user is an unauthorized user.

8. The image output system (1) according to claim 6,
wherein the output controlling system includes an output allowing system, which is adapted to allow the second image based on the second data that has been attempted to be obtained in response to the output instruction to be output by the second image output device (17) when the authentication system (31, 50) determines that the user is an authorized user.

9. The image output system according to claim 6, further comprising:
a judging system (31), which is adapted to judge whether the second data requires an authentication process before the second obtaining system attempts to obtain the second data,
wherein the authentication system (31, 50) executes the authentication process when the judging system (31) determines that the authentication process is required.

10. A method of outputting a first image and a second image from an image output apparatus (1), comprising:
a first image output step, comprising outputting the first image by a first image output device (21);
a second image output step, comprising outputting the second image by a second image output device (17), wherein the second image is capable of being output at a higher resolution than the resolution of the first image;
a first obtaining step;
a first controlling step, comprising controlling outputting the first image based on first data obtained in the first obtaining step, by the first image output device (21);
a second obtaining step;
a second controlling step, comprising controlling outputting the second image based on second data obtained in the second obtaining step, by the second image output device (17) when the second obtaining system obtains the second data,
**characterized in that**:
the first obtaining step comprises obtaining first data and locator information that are stored in association with each other in a storing unit (30), the first data being used for outputting a first image from the first image output device (21), the locator information indicating a location of the second data, the second data being in association with the first data and used for outputting a second image from the second image output device (17),
the first controlling step further comprises controlling the output of a notification concerning location information based on the locator information obtained from the first obtaining step, by the first image output device (21), and
the second obtaining step comprises obtaining the second data according to the locator information obtained by the first obtaining system from the storing unit (30),
wherein the second data is obtained when the first image based on the first data and the notification concerning location information are output by the first image output device (21), and an output instruction is given by a user to the second image output device (17) based on the first data being output by the first image output device (21).

11. A computer program product including computer readable instructions, which are adapted to cause a computer to output a first image and a second image by the method according to claim 10.

## Patentansprüche

1. Bildausgabegerät (10), aufweisend:
Eine erste Bildausgabevorrichtung (21), welche dazu adaptiert ist, ein erstes Bild auszugeben;
eine zweite Bildausgabevorrichtung (17), welche dazu geeignet ist, ein zweites Bild in einer höheren Auflösung auszugeben, als eine Auflösung der ersten Bildausgabevorrichtung (21);
ein erstes Bezugssystem (11),
ein erstes Steuersystem (11), welches dazu adaptiert ist, die Ausgabe des ersten Bildes zu steuern, basierend auf ersten Daten, bezogen durch das erste Bezugssystem, durch die erste Bildausgabevorrichtung (21);
ein zweites Bezugssystem (11);
ein zweites Steuersystem (11), welches dazu adaptiert ist, die Ausgabe des zweiten Bilds zu steuern, basierend auf zweiten Daten, bezogen durch das zweite Bezugssystem, durch die zweite Bildausgabevorrichtung (17), wenn das zweite Bezugssystem (11) die zweiten Daten bezieht;
**dadurch gekennzeichnet, dass**
das erste Bezugssystem dazu adaptiert ist, die ersten Daten und Positionsinformationen, welche in Verbindung mit einander in einer Speichereinheit (30) gespeichert sind zu beziehen, wobei die ersten Daten zur Ausgabe des ersten Bildes durch die erste Bildausgabevorrichtung (21) verwendet werden, wobei die Positionsinformation eine Position der zweiten Daten anzeigt, wobei die zweiten Daten in Verbindung mit den ersten Daten stehen und dazu verwendet werden, das zweite Bild durch die zweite Bildausgabevorrichtung (17) auszugeben,
wobei das erste Steuersystem (11) des Weiteren dazu adaptiert ist, die Ausgabe einer Ankündigung betreffend der Positionsinformationen zu steuern, basierend auf den durch das erste Bezugssystem bezogenen Positionsinformationen, von der ersten Bildausgabevorrichtung (21), und
wobei das zweite Bezugssystem dazu adaptiert ist, die zweiten Daten entsprechend der Positionsinformationen zu beziehen, welche durch das erste Bezugssystem (11) von der Speichereinheit (30) bezogen werden,
wobei die zweiten Daten bezogen werden, wenn das erste Bild basierend auf den ersten Daten und der Ankündigung entsprechend der Positionsinformationen ausgegeben wird, durch die erste Bildausgabevorrichtung (21), und wobei ein Ausgabebefehl durch einen Anwender an die zweite Bildausgabevorrichtung (17) gegeben wird, basierend auf den ersten Daten, welche durch die erste Bildausgabevorrichtung (21) ausgegeben wurden.

2. Bildausgabegerät (10) gemäß Anspruch 1, enthaltend eine Eingabevorrichtung, welche dazu adaptiert ist, von einem Anwender durch eine Eingabeoperation bedient zu werden,
wobei das zweite Bezugssystem (11) dazu adaptiert ist, die zweiten Daten in Verbindung mit den ersten Daten zu beziehen, als Reaktion auf den Ausgabebefehl des Anwenders an die zweite Bildausgabevorrichtung (17), welche in die Eingabevorrichtung eingegeben wurde.

3. Bildausgabegerät (10) gemäß Anspruch 1 oder 2, wobei das erste Steuersystem (11) dazu adaptiert ist, das erste Bild auszugeben, falls ein Fehlen der Positionsinformationen durch die erste Bildausgabevorrichtung (21) angezeigt wird, wenn das erste Bezugssystem die ersten Daten bezieht, aber die Positionsinformationen in Verbindung mit den ersten Daten fehlen.

4. Bildausgabegerät (10) gemäß einem der Ansprüche 1 bis 3,
wobei die erste Bildausgabevorrichtung (21) eine Anzeigevorrichtung ist, welche optisch ein Bild ausgibt, und
wobei die zweite Bildausgabevorrichtung (17) eine Druckvorrichtung ist, welche ein Bild auf ein Aufnahmemedium druckt.

5. Bildausgabesystem (1) enthaltend:
das Bildausgabegerät (10) gemäß Anspruch 2;
einen Server (30), welcher eine Speichereinheit (35) aufweist, zum Speichern der ersten Daten und der Positionsinformationen darin, welche in Verbindung miteinander stehen und an das Bildausgabegerät (10) geliefert werden, um durch die erste Bildausgabevorrichtung (21) ausgegeben zu werden, und der zweiten Daten, welche in Verbindung mit den ersten Daten stehen und an das Bildausgabegerät geliefert werden, um durch die zweite Bildausgabevorrichtung (17) ausgegeben zu werden, als Antwort auf den Ausgabebefehl des Anwenders,
wobei das Liefern der ersten Daten, der Positionsinformationen und der zweiten Daten durch ein Administratorsystem administriert wird.

6. Bildausgabesystem (1), enthaltend:
das Bildausgabegerät (10) gemäß Anspruch 2;
ein Authentifikationssystem (31, 50), welches dazu adaptiert ist, einen Authentifikationsprozess auszuführen, zum Entscheiden, ob der Anwender ein berechtigter Anwender ist, basierend auf Identifikationsinformationen des Anwenders, welche durch die Eingabevorrichtung eingegeben werden; und
ein Ausgabesteuersystem, welches dazu adaptiert ist, die Ausgabe des zweiten Bilds basierend auf den zweiten Daten zu steuern, welches versucht wird zu beziehen, als Antwort auf den Ausgabebefehl, welcher durch die zweite Bildausgabevorrichtung (17) ausgegeben wird, wenn das Authentifikationssystem (31, 50) entscheidet, ob der Anwender ein berechtigter Anwender ist.

7. Bildausgabesystem (1) gemäß Anspruch 6,
wobei das Ausgabesteuersystem ein Ausgabeverhinderungssystem enthält, welches dazu adaptiert ist, die Ausgabe des zweiten Bildes basierend auf den zweiten Daten zu verhindern, welches versucht wird zu beziehen, als Antwort auf den Ausgabebefehl durch die zweite Bildausgabevorrichtung (17), wenn das Authentifikationssystem (31, 50) entscheidet, dass der Anwender ein nicht berechtigter Anwender ist.

8. Bildausgabesystem (1) gemäß Anspruch 6,
wobei das Ausgabesteuersystem ein Ausgabegenehmigungssystem enthält, welches dazu adaptiert ist, die Ausgabe des zweiten Bildes basierend auf den zweiten Daten zu erlauben, welches versucht wird zu beziehen, als Antwort auf den Ausgabebefehl durch die zweite Bildausgabevorrichtung (17), wenn das Authentifikationssystem (31, 50) entscheidet, dass der Anwender ein berechtigter Anwender ist.

9. Bildausgabesystem (1) gemäß Anspruch 6, des Weiteren aufweisend:
ein Entscheidungssystem (31), welches dazu adaptiert ist zu entscheiden, ob die zweiten Daten einen Authentifikationsprozess benötigen, bevor das zweite Bezugssystem versucht, die zweiten Daten zu beziehen,
wobei das Authentifikationssystem (31, 50) den Authentifikationsprozess ausführt, wenn das Entscheidungssystem (31) entscheidet, dass der Authentifikationsprozess benötigt wird.

10. Verfahren zur Ausgabe eines ersten Bildes und eines zweiten Bildes durch ein Bildausgabegerät (1), aufweisend:
einen ersten Bildausgabeschritt, aufweisend das Ausgeben des ersten Bildes durch eine erste Bildausgabevorrichtung (21);
einen zweiten Bildausgabeschritt, aufweisend die Ausgabe des zweiten Bildes durch eine zweite Bildausgabevorrichtung (17), wobei das zweite Bild dazu geeignet ist, in einer höheren Auflösung ausgegeben zu werden, als die Auflösung des ersten Bilds;
einen ersten Bezugsschritt;
einen ersten Steuerschritt, aufweisend das Steuern der Ausgabe des ersten Bildes, basierend auf den ersten Daten, welche durch den ersten Bezugsschritt bezogen werden, durch die erste Bildausgabevorrichtung (21);
einen zweiten Bezugsschritt;
einen zweiten Steuerschritt, enthaltend das Steuern der Ausgabe des zweiten Bildes, basierend auf den zweiten Daten bezogen aus dem zweiten Bezugsschritt, durch die zweite Bildausgabevorrichtung (17), wenn das zweite Bezugssystem die zweiten Daten bezieht, **dadurch gekennzeichnet, dass**
der erste Bezugsschritt das Beziehen der ersten Daten und der Positionsinformationen enthält, welche in Verbindung miteinander in einer Speichereinheit (30) gespeichert sind, wobei die ersten Daten zur Ausgabe eines ersten Bildes durch die erste Bildausgabevorrichtung (21) verwendet werden, wobei die Positionsinformationen eine Position der zweiten Daten anzeigen, wobei die zweiten Daten in Verbindung mit den ersten Daten stehen und dazu verwendet werden, ein zweites Bild durch die zweite Bildausgabevorrichtung (17) auszugeben,
wobei der erste Steuerschritt des Weiteren das Steuern der Ausgabe einer Ankündigung betreffend der Positionsinformationen enthält, basierend auf den Positionsinformationen, welche aus dem ersten Bezugsschritt bezogen werden, durch die erste Bildausgabevorrichtung (21), und
wobei der zweite Bezugsschritt das Beziehen der zweiten Daten gemäß der Positionsinformationen aufweist, welche durch das erste Bezugssystem bezogen werden, von der Speichereinheit (30),
wobei die zweiten Daten bezogen werden, wenn das erste Bild basierend auf den ersten Daten und der Ankündigung betreffend der Positionsinformationen durch die erste Bildausgabevorrichtung (21) ausgegeben werden, und ein Ausgabebefehl durch einen Anwender an die zweite Bildausgabevorrichtung (17) gegeben wird, basierend auf den ersten Daten, welche durch die erste Bildausgabevorrichtung (21) ausgegeben werden.

11. Ein Computerprogramm-Produkt, welches computerlesbare Befehle aufweist, welche dazu geeignet sind, einen Computer zur Ausgabe eines ersten Bildes und eines zweiten Bildes zu veranlassen, durch das Verfahren gemäß Anspruch 10.

## Revendications

1. Appareil de sortie d'image (10), comprenant :
un premier dispositif de sortie d'image (21), qui est adapté pour délivrer en sortie une première image ;
un deuxième dispositif de sortie d'image (17), qui est capable de délivrer en sortie une deuxième image à une résolution supérieure à une résolution du premier dispositif de sortie d'image (21) ;
un premier système d'obtention (11),
un premier système de commande (11), qui est adapté pour commander la sortie de la première image sur la base de premières données obtenues par le premier système d'obtention, par le premier dispositif de sortie d'image (21) ;
un deuxième système d'obtention (11) ;
un deuxième système de commande (11), qui est adapté pour commander la sortie de la deuxième image sur la base de deuxièmes données obtenues par le deuxième système d'obtention, par le deuxième dispositif de sortie d'image (17) lorsque le deuxième système d'obtention (11) obtient les deuxièmes données ;
**caractérisé en ce que** :
le premier système d'obtention est adapté pour obtenir les premières données et des informations de localisateur qui sont stockées en association les unes avec les autres dans une unité de stockage (30), les premières données étant utilisées pour délivrer en sortie la première image par le premier dispositif de sortie d'image (21), les informations de localisateur indiquant une localisation des deuxièmes données, les deuxièmes données étant en association avec les premières données et utilisées pour délivrer en sortie la deuxième image par le deuxième dispositif de sortie d'image (17),
le premier système de commande (11) est en outre adapté pour commander la sortie d'une notification concernant des informations de localisation sur la base des informations de localisateur obtenues à partir du premier système d'obtention, par le premier dispositif de sortie d'image (21), et
le deuxième système d'obtention est adapté pour obtenir les deuxièmes données en fonction des informations de localisateur obtenues par le premier système d'obtention (11) à partir de l'unité de stockage (30),
dans lequel les deuxièmes données sont obtenues lorsque la première image sur la base des premières données et la notification concernant les informations de localisation sont délivrées en sortie par le premier dispositif de sortie d'image (21), et une instruction de sortie est donnée par un utilisateur au deuxième dispositif de sortie d'image (17) sur la base des premières données étant délivrées en sortie par le premier dispositif de sortie d'image (21).

2. Appareil de sortie d'image (10) selon la revendication 1, comprenant un dispositif d'entrée qui est adapté pour être actionné par un utilisateur pour une opération d'entrée,
dans lequel le deuxième système d'obtention (11) est adapté pour obtenir les deuxièmes données associées aux premières données en réponse à l'instruction de sortie à partir de l'utilisateur au deuxième dispositif de sortie d'image (17) étant introduite au dispositif d'entrée.

3. Appareil de sortie d'image (10) selon la revendication 1 ou 2, dans lequel le premier système de commande (11) est adapté pour délivrer en sortie la première image indiquant l'absence des informations de localisateur à partir du premier dispositif de sortie d'image (21) lorsque le premier système d'obtention obtient les premières données mais il manque d'informations de localisateur associées aux premières données.

4. Appareil de sortie d'image (10) selon l'une des revendications 1 à 3,
dans lequel le premier dispositif de sortie d'image (21) est un dispositif d'affichage qui délivre en sortie de manière optique une image, et
dans lequel le deuxième dispositif de sortie d'image (17) est un dispositif d'impression qui imprime une image sur un support d'enregistrement.

5. Système de sortie d'image (1), comprenant :
l'appareil de sortie d'image (10) selon la revendication 2 ;
un serveur (30) ayant une unité de stockage (35) pour stocker dedans les premières données et les informations de localisateur qui sont en association les unes avec les autres et transmises à l'appareil de sortie d'image (10) pour être délivrées en sortie par le premier dispositif de sortie d'image (21), et les deuxièmes données qui sont en association avec les premières données et transmises à l'appareil de sortie d'image pour être délivrées en sortie par le deuxième dispositif de sortie d'image (17) en réponse à l'instruction de sortie à partir de l'utilisateur,
dans lequel la transmission des premières données, des informations de localisateur, et des deuxièmes données est administrée par un système d'administration.

6. Système de sortie d'image (1), comprenant :
l'appareil de sortie d'image (10) selon la revendication 2 ;
un système d'authentification (31, 50), qui est adapté pour exécuter un processus d'authentification pour juger si l'utilisateur est un utilisateur autorisé sur la base d'informations d'identification de l'utilisateur introduites via le dispositif d'entrée ; et
un système de commande de sortie, qui est adapté pour commander la sortie de la deuxième image sur la base des deuxièmes données qu'on a tenté d'obtenir en réponse à l'instruction de sortie selon laquelle elle est délivrée en sortie par le deuxième dispositif de sortie d'image (17) lorsque le système d'authentification (31, 50) juge si l'utilisateur est un utilisateur autorisé.

7. Système de sortie d'image (1) selon la revendication 6,
dans lequel le système de commande de sortie comporte un système empêchant la sortie, qui est adapté pour empêcher la deuxième image, sur la base des deuxièmes données qu'on tenté d'obtenir en réponse à l'instruction de sortie, d'être délivrée en sortie par le deuxième dispositif de sortie d'image (17) lorsque le système d'authentification (31, 50) détermine que l'utilisateur est un utilisateur non autorisé.

8. Système de sortie d'image (1) selon la revendication 6,
dans lequel le système de commande de sortie comporte un système permettant la sortie, qui est adapté pour permettre à la deuxième image, sur la base des deuxièmes données qu'on a tenté d'obtenir en réponse à l'instruction de sortie, d'être délivrée en sortie par le deuxième dispositif de sortie d'image (17) lorsque le système d'authentification (31, 50) détermine que l'utilisateur est un utilisateur autorisé.

9. Système de sortie d'image selon la revendication 6, comprenant en outre :
un système de jugement (31), qui est adapté pour juger si les deuxièmes données nécessitent un processus d'authentification avant que le deuxième système d'obtention tente d'obtenir les deuxièmes données,
dans lequel le système d'authentification (31, 50) exécute le processus d'authentification lorsque le système de jugement (31) détermine que le processus d'authentification est nécessaire.

10. Procédé destiné à délivrer en sortie une première image et une deuxième image à partir d'un appareil de sortie d'image (1), comprenant :
une première étape de sortie d'image, comprenant le fait de délivrer en sortie la première image par un premier dispositif de sortie d'image (21) ;
une deuxième étape de sortie d'image, comprenant le fait de délivrer en sortie la deuxième image par un deuxième dispositif de sortie d'image (17), où la deuxième image est capable d'être délivrée en sortie à une résolution supérieure à la résolution de la première image ;
une première étape d'obtention ;
une première étape de commande, comprenant le fait de commander la sortie de la première image sur la base de premières données obtenues dans la première étape d'obtention, par le premier dispositif de sortie d'image (21) ;
une deuxième étape d'obtention ;
une deuxième étape de commande, comprenant le fait de commander la sortie de la deuxième image sur la base de deuxièmes données obtenues dans la deuxième étape d'obtention, par le deuxième dispositif de sortie d'image (17) lorsque le deuxième système d'obtention obtient les deuxièmes données,
**caractérisé en ce que** :
la première étape d'obtention comprend le fait d'obtenir des premières données et des informations de localisateur qui sont stockées en association les unes avec les autres dans une unité de stockage (30), les premières données étant utilisées pour délivrer en sortie une première image à partir du premier dispositif de sortie d'image (21), les informations de localisateur indiquant une localisation des deuxièmes données, les deuxièmes données étant en association avec les premières données et utilisées pour délivrer en sortie une deuxième image à partir du deuxième dispositif de sortie d'image (17),
la première étape de commande comprend en outre le fait de commander la sortie d'une notification concernant des informations de localisation sur la base des informations de localisateur obtenues à partir de la première étape d'obtention, par le premier dispositif de sortie d'image (21), et
la deuxième étape d'obtention comprend le fait d'obtenir les deuxièmes données en fonction des informations de localisateur obtenues par le premier système d'obtention à partir de l'unité de stockage (30),
dans lequel les deuxièmes données sont obtenues lorsque la première image sur la base des premières données et la notification concernant des informations de localisation sont délivrées en sortie par le premier dispositif de sortie d'image (21), et une instruction de sortie est donnée par un utilisateur au deuxième dispositif de sortie d'image (17) sur la base des premières données étant délivrées en sortie par le premier dispositif de sortie d'image (21).

11. Produit de programme informatique comportant des instructions lisibles par ordinateur, qui sont adaptées pour amener un ordinateur à délivrer en sortie une première image et une deuxième image par le procédé selon la revendication 10.
